(19) Europäisches Patentamt
European Patent Office
Office européen des brevets

(11) **EP 3 474 499 B1**

(12) **EUROPEAN PATENT SPECIFICATION**

(45) Date of publication and mention
of the grant of the patent:
**12.08.2020 Bulletin 2020/33**

(21) Application number: **16925546.0**

(22) Date of filing: **28.12.2016**

(51) Int Cl.:
*H04L 12/26* (2006.01)      *H04L 12/703* (2013.01)

(86) International application number:
**PCT/CN2016/112734**

(87) International publication number:
**WO 2018/119790 (05.07.2018 Gazette 2018/27)**

(54) **NETWORK PERFORMANCE DETECTION METHOD AND APPARATUS**

VERFAHREN UND VORRICHTUNG ZUR ERKENNUNG DER NETZWERKLEISTUNG

PROCÉDÉ ET APPAREIL DE DÉTECTION DE PERFORMANCE DE RÉSEAU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.04.2019 Bulletin 2019/17**

(73) Proprietor: **Huawei Technologies Co., Ltd.**
**Longgang District**
**Shenzhen, Guangdong 518129 (CN)**

(72) Inventors:
• **ZHANG, Lvchuan**
  **Shenzhen**
  **Guangdong 518129 (CN)**
• **CAI, Hongjian**
  **Shenzhen**
  **Guangdong 518129 (CN)**

• **LIU, Xinchao**
  **Shenzhen**
  **Guangdong 518129 (CN)**
• **WANG, Yufei**
  **Shenzhen**
  **Guangdong 518129 (CN)**

(74) Representative: **Thun, Clemens**
**Mitscherlich PartmbB**
**Patent- und Rechtsanwälte**
**Sonnenstraße 33**
**80331 München (DE)**

(56) References cited:
EP-A1- 3 188 413          EP-A1- 3 474 493
CN-A- 101 677 289         CN-A- 102 684 947
CN-A- 104 780 095         US-A1- 2006 092 850
US-A1- 2007 081 460       US-A1- 2011 158 105
US-A1- 2014 269 266

EP 3 474 499 B1

## Description

## TECHNICAL FIELD

This application relates to Internet technologies, and in particular, to a network performance check method and apparatus.

## BACKGROUND

As Internet technologies develop, operators perform Internet Protocol (Internet Protocol, IP for short) transformation (All-IP is a development trend of current and future networks) for an overall network, to reduce network operating expenses and meet service development requirements. However, an IP technology is a simple connectionless protocol that cannot ensure transmission reliability.

As an IP network carries more new Internet services (such as various video services, voice services, and games), end users propose increasingly high requirements for experiencing Internet services, and further, operators have higher requirements for IP network performance. How IP network performance is measured and optimized is one of challenges that operators face currently and in the future. Therefore, an IP network performance monitoring technology emerges.

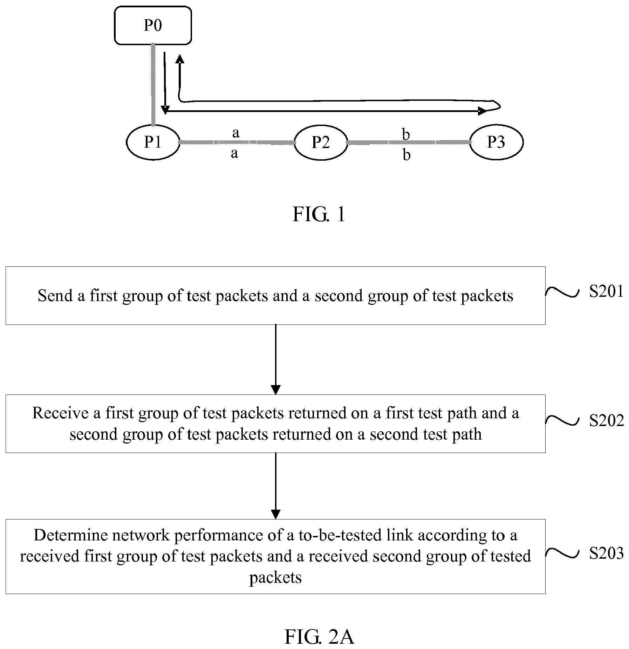

Limited by a check point quantity and location, network performance of a link can be obtained only by determining network performance of a test path. Network performance measurement of a current hop link relies on network performance of a previous hop link. Consequently, a network performance measurement result of the current hop link has a relatively large error. FIG. 1 is a schematic diagram of an application scenario of existing IP network performance monitoring. As shown in FIG. 1, it is assumed that both packet loss rates of a bidirectional link between nodes P 1 and P2 are a, and packet loss rates of a bidirectional link between P2 and P3 are b. a is determined according to a test path $L_{1,2}$ = <P0, P1, P2, P1, P0>, and a packet loss rate of a test path $L_{1,2,3}$ = <P0, P1, P2, P3, P2, P1, P0> is determined according to $plr_{L_{1,2,3}}$ = $1-(1-a)^2(1-b)^2$ Further, the packet loss rate b = $1-sqrt((1-plr_{L_{1,2,3}})/(1-a)^2)$ of the link <P2, P3> is determined according to a and the packet loss rate of the test path $L_{1,2,3}$

Actual network performance of a network changes in real time, and check time of the test path $L_{1,2}$ is usually not the same as check time of the test path $L_{1,2,3}$. Consequently, a measurement result of the packet loss rate of the link <P2, P3> has a relatively large error. For example, the packet loss rate of the link <P1, P2> is a when the packet loss rate of the test path $L_{1,2}$ is checked, but an actual packet loss rate of the links <P1, P2> is a1 when the packet loss rate of the test path $L_{1,2,3}$ is checked. Therefore, when b is calculated, if the packet loss rate of <P1, P2> is still considered as a, calculation of b has a relatively large error.

US 2014/0269266 A1 refers to a method and system for use of segment routing in monitoring of a network path. In one example, the method includes selecting a plurality of segment identifiers and assembling the segment identifiers into a segment identifier stack, where the segment identifier stack encodes a test path within the network for attempted routing of a test message. The method may further include inserting the segment identifier stack into a header associated with the test message, and forwarding the test message according to an entry in a forwarding table corresponding to the segment identifier at the top of the segment identifier stack. Interior gateway protocol advertisements may be used to communicate segment identifiers for creating or updating of the data structure or the forwarding table.

US 2006/0092850 A1 refers to a technique for data network congestion diagnosis using remote estimation of round-trip delays. A monitoring node transmits test messages between network nodes and measures the transit times between when the test messages are transmitted from, and when they return to, the monitoring node. A path delay between network nodes is determined based on the measured time delays. The techniques for determining network path delay are also utilized in conjunction with a three phase test procedure for diagnosing network congestion problems. Due to various network topologies and routing tables, certain confirmatory checks may be required to determine whether the procedures of the first or second phase test procedures are appropriate for particular path segments. Further, queuing delays may be determined by subtracting traffic independent delays from the measured transit times of the test messages, and such queuing delays may be used to determine the path delays. Such traffic independent delays may be determined during periods of low network traffic.

EP 3 474 493 A1 refers to a network performance measurement method and a probing device, and relates to the field of communications technologies. The method includes: determining a support node, where the support node is a node in a to-be-measured network; selecting a first to-be-probed node from at least one adjacent node of the support node; generating two detection paths according to the support node and the first to-be-probed node, where the two detection paths include a first detection path and a second detection path, the first detection path includes a path between a probing device and the support node, the second detection path includes the first detection path and a first to-be-measured link, and the first to-be-measured link is a link between the support node and the first to-be-probed node; sending a detection packet on each detection path of the two detection paths, and detecting parameter information of each detection path; and determining, according to parameter information of the first detection path and parameter information of the second detection path, link performance of the first to-be-measured link included in the to-be-measured network.

## SUMMARY

Embodiments of this application provide a network performance check method and apparatus, so as to improve accuracy of a network performance measurement result of a to-be-tested link.

This problem is solved by the subject matter of the independent claims. Further implementation forms are provided in the dependent claims.

According to a first aspect, an embodiment of this application provides a network performance check method, including:

sending a first group of test packets and a second group of test packets, where the first group of test packets is used to test a first test path, the second group of test packets is used to test a second test path, and the first test path includes the second test path and a to-be-tested link;

receiving a first group of test packets returned on the first test path and a second group of test packets returned on the second test path, where the first group of test packets flaps on the to-be-tested link according to a quantity of preset flapping times; and

determining network performance of the to-be-tested link according to a received first group of test packets and a received second group of test packets.

According to the network performance check method provided in the first aspect, the first group of test packets used to test the first test path and the second group of test packets used to test the second test path are sent, where the first test path includes the second test path and the to-be-tested link; further, the first group of test packets (the first group of test packets flaps on the to-be-tested link according to the quantity of preset flapping times) returned on the first test path and the second group of test packets returned on the second test path are received; and the network performance of the to-be-tested link is determined according to the received first group of test packets and the received second group of test packets. It can be learnt that in this embodiment of this application, the first test packet flaps on the to-be-tested link, to increase a proportion of the to-be-tested link to the whole first test path (that is, a proportion of the to-be-tested link is greater than that of an upstream link). This reduces impact of upstream link network performance (such as network performance of the second test path) fluctuation on network performance measurement of the to-be-tested link, so that a network performance measurement result of the to-be-tested link is more accurate.

In a possible design, before the sending a first group of test packets and a second group of test packets, the method further includes:

generating the first group of test packets according to the quantity of preset flapping times, where each first test packet in the first group of test packets carries at least one first link tag group and at least one second link tag group that are corresponding to the to-be-tested link, where each first link tag group includes M same first link tags, each second link tag group includes M same second link tags, a value of M is equal to the quantity of preset flapping times, the first link tag is used to indicate a next hop target node of the first test packet in a forward transmission direction, and the second link tag is used to indicate a next hop target node of the first test packet in a reverse transmission direction.

In a possible design, the determining network performance of the to-be-tested link according to a received first group of test packets and a received second group of test packets includes:

determining a latency or a jitter of the first test path according to time information carried in each first test packet in the received first group of test packets;

determining a latency or a jitter of the second test path according to time information carried in each second test packet in the received second group of test packets; and

determining a latency of the to-be-tested link according to the latency of the first test path, the latency of the second test path, and the quantity of preset flapping times; or determining a jitter of the to-be-tested link according to the jitter of the first test path, the jitter of the second test path, and the quantity of preset flapping times.

In a possible design, the determining network performance of the to-be-tested link according to a received first group of test packets and a received second group of test packets includes:

determining a packet loss rate of the first test path according to a quantity of first test packets in the sent first group of test packets and a quantity of first test packets in the received first group of test packets;

determining a packet loss rate of the second test path according to a quantity of second test packets in the sent second group of test packets and a quantity of second test packets in the received second group of test packets; and

determining a packet loss rate of the to-be-tested link according to the packet loss rate of the first test path, the packet loss rate of the second test path, and the quantity of preset flapping times.

In a possible design, the determining network performance of the to-be-tested link according to a received first group of test packets and a received second group of test packets includes:

determining a quantity of out-of-order test packets in the first group of test packets according to a first preset packet identifier and a packet identity ID of a test packet that is carried in each first test packet in the received first group of test packets, and determining an out-of-order rate of the first test path according to a quotient obtained by dividing the quantity of out-of-order test packets by the quantity of first test packets that are sent on the first test path;

determining a quantity of out-of-order test packets in the second group of test packets according to a second preset packet identifier and a packet ID of a test packet that is carried in each second test packet in the received second group of test packets, and determining an out-of-order rate of the second test path according to a quotient obtained by dividing the quantity of out-of-order test packets by the quantity of second test packets that are sent on the second test path; and

determining an out-of-order rate of the to-be-tested link according to the out-of-order rate of the first test path, the out-of-order rate of the second test path, and the quantity of preset flapping times.

In a possible design, the determining a latency or a jitter of the first test path according to time information carried in each first test packet in the received first group of test packets includes:

allocating a receiving timestamp to each first test packet according to disorder of the first group of test packets; and determining the latency or the jitter of the first test path according to the receiving timestamp and a sending timestamp of each first test packet.

In a possible design, the allocating a receiving timestamp to each first test packet according to disorder of the first group of test packets includes:

when receiving an $i^{th}$ first test packet in the first group of test packets, determining whether i is equal to j, where i is a packet identifier of a currently received first test packet, and j is a packet identifier of a to-be-processed packet;

if i is equal to j, determining whether a cache sequence stores a $j+1^{th}$ first test packet, where the cache sequence is used to store an out-of-order first test packet, and a packet identifier of the out-of-order first test packet is greater than j; and

if the cache sequence stores the $j+1^{th}$ first test packet, modifying an initial receiving timestamp of the $j+1^{th}$ first test packet to a receiving timestamp of the $i^{th}$ first test packet, and adding 1 to j; performing a step of determining whether the cache sequence stores a $j+1^{th}$ first test packet until the cache sequence does not store the $j+1^{th}$ first test packet; and continuing to receive a next reached first test packet in the first group of test packets.

In a possible design, after the determining whether i is equal to j, the method further includes:

if i is not equal to j, determining whether the cache sequence is filled up;

if the cache sequence is not filled up, storing the $i^{th}$ first test packet to the cache sequence, and continuing to receive a next reached first test packet in the first group of test packets; or

if the cache sequence is filled up, determining whether the cache sequence stores a $j^{th}$ first test packet; and

if the cache sequence does not store the $j^{th}$ first test packet, determining that the $j^{th}$ first test packet has been lost; determining a latency of the $j^{th}$ first test packet according to an average latency of first test packets whose packet identifiers are less than j in the first group of test packets; and performing the step of determining whether the cache sequence stores a $j+1^{th}$ first test packet.

In a possible design, after the modifying an initial receiving timestamp of the $j+1^{th}$ first test packet to a receiving timestamp of the $i^{th}$ first test packet, the method further includes:

deleting the $j+1^{th}$ first test packet from the cache sequence.

According to the network performance check method provided in the implementations, the receiving timestamp is allocated to each first test packet according to the disorder of the first group of test packets; and further, the latency or the jitter of the first test path is calculated according to the receiving timestamp (that is, a proper receiving timestamp allocated to each first test packet according to the disorder of the first group of test packets) and the sending timestamp of each first test packet, to obtain a more accurate measurement result, so that accuracy of a latency or jitter measurement result of the to-be-tested link is further improved.

According to a second aspect, an embodiment of this application provides a network performance check apparatus, including:

a sending module, configured to send a first group of test packets and a second group of test packets, where the first group of test packets is used to test a first test path, the second group of test packets is used to test a second test path, and the first test path includes the second test path and a to-be-tested link;

a receiving module, configured to receive a first group of test packets returned on the first test path and a second group of test packets returned on the second test path, where the first group of test packets flaps on the to-be-tested link according to a quantity of preset flapping times; and

a determining module, configured to determine network performance of the to-be-tested link according to a received first group of test packets and a received second group of test packets.

In a possible design, the apparatus further includes:

a generation module, configured to generate the first group of test packets according to the quantity of preset flapping times, where

each first test packet in the first group of test packets carries at least one first link tag group and at least one second link tag group that are corresponding to the to-be-tested link, where each first link tag group includes M same first link tags, each second link tag group includes M same second link tags, a value of M is equal to the quantity of preset flapping times, the first link tag is used to indicate a next hop target node of the first test packet in a forward transmission direction, and the second link tag is used to indicate a next hop target node of the first test packet in a reverse transmission direction.

In a possible design, the determining module includes:

a first determining submodule, configured to determine a latency or a jitter of the first test path according to time information carried in each first test packet in the received first group of test packets;

a second determining submodule, configured to determine a latency or a jitter of the second test path according to time information carried in each second test packet in the received second group of test packets; and

a third determining submodule, configured to: determine a latency of the to-be-tested link according to the latency of the first test path, the latency of the second test path, and the quantity of preset flapping times; or determine a jitter of the to-be-tested link according to the jitter of the first test path, the jitter of the second test path, and the quantity of preset flapping times.

In a possible design, the determining module includes:

a fourth determining submodule, configured to determine a packet loss rate of the first test path according to a quantity of first test packets in the sent first group of test packets and a quantity of first test packets in the received first group of test packets;

a fifth determining submodule, configured to determine a packet loss rate of the second test path according to a quantity of second test packets in the sent second group of test packets and a quantity of second test packets in the received second group of test packets; and

a sixth determining submodule, configured to determine a packet loss rate of the to-be-tested link according to the packet loss rate of the first test path, the packet loss rate of the second test path, and the quantity of preset flapping times.

In a possible design, the determining module includes:

a seventh determining submodule, configured to: determine a quantity of out-of-order test packets in the first group of test packets according to a first preset packet identifier and a packet identity ID of a test packet that is carried in each first test packet in the received first group of test packets, and determine an out-of-order rate of the first test path according to a quotient obtained by dividing the quantity of out-of-order test packets by the quantity of first test packets that are sent on the first test path;

an eighth determining submodule, configured to: determine a quantity of out-of-order test packets in the second group of test packets according to a second preset packet identifier and a packet ID of a test packet that is carried in each second test packet in the received second group of test packets, and determine an out-of-order rate of the second test path according to a quotient obtained by dividing the quantity of out-of-order test packets by the quantity of second test packets that are sent on the second test path; and

a ninth determining submodule, configured to determine an out-of-order rate of the to-be-tested link according to the out-of-order rate of the first test path, the out-of-order rate of the second test path, and the quantity of preset flapping times.

In a possible design, the first determining submodule includes:

an allocation unit, configured to allocate a receiving timestamp to each first test packet according to disorder of the first group of test packets; and
a determining unit, configured to determine the latency or the jitter of the first test path according to the receiving timestamp and a sending timestamp of each first test packet.

In a possible design, the allocation unit is specifically configured to:

when the receiving module receives an $i^{th}$ first test packet in the first group of test packets, determine whether i is equal to j, where i is a packet identifier of a currently received first test packet, and j is a packet identifier of a to-be-processed packet;
if i is equal to j, determine whether a cache sequence stores a $j+1^{th}$ first test packet, where the cache sequence is used to store an out-of-order first test packet, and a packet identifier of the out-of-order first test packet is greater than j; and
if the cache sequence stores the $j+1^{th}$ first test packet, modify an initial receiving timestamp of the $j+1^{th}$ first test packet to a receiving timestamp of the $i^{th}$ first test packet, and add 1 to j; and perform a step of determining whether the cache sequence stores a $j+1^{th}$ first test packet until the cache sequence does not store the $j+1^{th}$ first test packet; and the receiving module continues to receive a next reached first test packet in the first group of test packets.

In a possible design, the allocation unit is further configured to:

if i is not equal to j, determine whether the cache sequence is filled up;
if the cache sequence is not filled up, store the $i^{th}$ first test packet to the cache sequence, and the receiving module continues to receive a next reached first test packet in the first group of test packets; or
if the cache sequence is filled up, determine whether the cache sequence stores a $j^{th}$ first test packet; and
if the cache sequence does not store the $j^{th}$ first test packet, determine that the $j^{th}$ first test packet has been lost; determine a latency of the $j^{th}$ first test packet according to an average latency of first test packets whose packet identifiers are less than j in the first group of test packets; and perform the step of determining whether the cache sequence stores a $j+1^{th}$ first test packet.

In a possible design, after modifying the initial receiving timestamp of the $j+1^{th}$ first test packet to the receiving timestamp of the $i^{th}$ first test packet, the allocation unit is further configured to delete the $j+1^{th}$ first test packet from the cache sequence.

For beneficial effects of the network performance check apparatus provided in the implementations of the second aspect, reference may be made to the beneficial effects brought by various possible implementations of the first aspect. Details are not described herein again.

According to a third aspect, an embodiment of this application provides a network performance check method, including:

receiving a group of test packets returned on a test path;
allocating a receiving timestamp to each test packet in a group of test packets according to disorder of the group of test packets; and
determining a latency or a jitter of the test path according to the receiving timestamp and a sending timestamp of each test packet.

According to the network performance check method provided in the third aspect, after the group of test packets returned on the test path is received, the receiving timestamp is allocated to each test packet according to the disorder of the group of test packets; and further, network performance of the test path is determined according to the receiving timestamp (that is, a proper receiving timestamp allocated to each test packet according to the disorder of the group of test packets) and the sending timestamp of each test packet, so that a network performance measurement result of the test path obtained by means of calculation is more accurate.

In a possible design, the allocating a receiving timestamp to each test packet in a group of test packets according to disorder of the group of test packets includes:

when receiving an $i^{th}$ test packet in the group of test packets, determining whether i is equal to j, where i is a packet identifier of a currently received test packet, and j is a packet identifier of a to-be-processed packet;

if i is equal to j, determining whether a cache sequence stores a $j+1^{th}$ test packet, where the cache sequence is used to store an out-of-order test packet, and a packet identifier of the out-of-order test packet is greater than j; and

if the cache sequence stores the $j+1^{th}$ test packet, modifying an initial receiving timestamp of the $j+1^{th}$ test packet to a receiving timestamp of the $i^{th}$ test packet, and adding 1 to j; performing a step of determining whether the cache sequence stores a $j+1^{th}$ test packet until the cache sequence does not store the $j+1^{th}$ test packet; and continuing to receive a next reached test packet in the group of test packets.

In a possible design, after the determining whether i is equal to j, the method further includes:

if i is not equal to j, determining whether the cache sequence is filled up;

if the cache sequence is not filled up, storing the $i^{th}$ test packet to the cache sequence, and continuing to receive a next reached test packet in the group of test packets; or

if the cache sequence is filled up, determining whether the cache sequence stores a $j^{th}$ test packet; and

if the cache sequence does not store the $j^{th}$ test packet, determining that the $j^{th}$ test packet has been lost; determining a latency of the $j^{th}$ test packet according to an average latency of test packets whose packet identifiers are less than j in the group of test packets; and performing the step of determining whether the cache sequence stores a $j+1^{th}$ test packet.

In a possible design, after the modifying an initial receiving timestamp of the $j+1^{th}$ test packet to a receiving timestamp of the $i^{th}$ test packet, the method further includes:
deleting the $j+1^{th}$ test packet from the cache sequence.

According to a fourth aspect, an embodiment of this application provides a network performance check apparatus, including:

a receiving module, configured to receive a group of test packets returned on a test path;

an allocation module, configured to allocate a receiving timestamp to each test packet in a group of test packets according to disorder of the group of test packets; and

a determining module, configured to determine a latency or a jitter of the test path according to the receiving timestamp and a sending timestamp of each test packet.

In a possible design, the allocation module is specifically configured to:

when the receiving module receives an $i^{th}$ test packet in the group of test packets, determine whether i is equal to j, where i is a packet identifier of a currently received test packet, and j is a packet identifier of a to-be-processed packet;

if i is equal to j, determine whether a cache sequence stores a $j+1^{th}$ test packet, where the cache sequence is used to store an out-of-order test packet, and a packet identifier of the out-of-order test packet is greater than j; and

if the cache sequence stores the $j+1^{th}$ test packet, modify an initial receiving timestamp of the $j+1^{th}$ test packet to a receiving timestamp of the $i^{th}$ test packet, and add 1 to j; and perform a step of determining whether the cache sequence stores a $j+1^{th}$ test packet until the cache sequence does not store the $j+1^{th}$ test packet; and the receiving module continues to receive a next reached test packet in the group of test packets.

In a possible design, the allocation module is further configured to:

if i is not equal to j, determine whether the cache sequence is filled up;

if the cache sequence is not filled up, store the $i^{th}$ test packet to the cache sequence, and the receiving module continues to receive a next reached test packet in the group of test packets; or

if the cache sequence is filled up, determine whether the cache sequence stores a $j^{th}$ test packet; and

if the cache sequence does not store the $j^{th}$ test packet, determine that the $j^{th}$ test packet has been lost; determine a latency of the $j^{th}$ test packet according to an average latency of test packets whose packet identifiers are less than j in the group of test packets; and perform the step of determining whether the cache sequence stores a $j+1^{th}$ test packet.

In a possible design, after modifying the initial receiving timestamp of the j+1$^{th}$ test packet to the receiving timestamp of the i$^{th}$ test packet, the allocation module is further configured to:
delete the j+1$^{th}$ test packet from the cache sequence.

For beneficial effects of the network performance check apparatus provided in the implementations of the fourth aspect, reference may be made to the beneficial effects brought by various possible implementations of the third aspect. Details are not described herein again.

## BRIEF DESCRIPTION OF DRAWINGS

FIG. 1 is a schematic diagram of an application scenario of existing IP network performance monitoring;

FIG. 2A is a schematic flowchart of a first network performance check method embodiment according to this application;

FIG. 2B is a schematic diagram of an application scenario of a network performance check method according to this application;

FIG. 3A is a schematic flowchart of a second network performance check method embodiment according to this application;

FIG. 3B is a schematic diagram of a test packet format according to this application;

FIG. 4 is a schematic flowchart of a third network performance check method embodiment according to this application;

FIG. 5A is a schematic flowchart of a fourth network performance check method embodiment according to this application;

FIG. 5B is a schematic flowchart of a fifth network performance check method embodiment according to this application;

FIG. 6A is a schematic flowchart of a sixth network performance check method embodiment according to this application;

FIG. 6B is a schematic flowchart of allocating a proper receiving timestamp to each first test packet by a network performance check apparatus according to an embodiment of this application;

FIG. 7 is a schematic flowchart of allocating a proper receiving timestamp to each test packet by a network performance check apparatus according to an embodiment of this application;

FIG. 8 is a schematic diagram of a received test packet sequence and a cache sequence according to a network performance check method embodiment of this application;

FIG. 9A is a schematic flowchart of a seventh network performance check method embodiment according to this application;

FIG. 9B is a schematic flowchart of allocating a proper receiving timestamp to each test packet by a network performance check apparatus according to an embodiment of this application;

FIG. 10 is a schematic structural diagram of a first network performance check apparatus embodiment according to this application;

FIG. 11 is a schematic structural diagram of a second network performance check apparatus embodiment according to this application;

FIG. 12 is a schematic structural diagram of a third network performance check apparatus embodiment according to this application; and

FIG. 13 is a schematic structural diagram of a fourth network performance check apparatus embodiment according to this application.

## DESCRIPTION OF EMBODIMENTS

A prior-art manner of determining network performance such as a packet loss rate, a latency, a jitter, and an out-of-order rate is first described in detail.

(1) Packet loss rate:

A packet loss rate is a statistical value. Therefore, a packet loss rate on a test path cannot be obtained according to a single test packet, and needs to be obtained according to a group of test packets:

$$plr = 1 - N_{recv} / N_{send} \qquad (1),$$

where
$plr$ represents a packet loss rate, and $N_{send}$ and $N_{recv}$ represent a quantity of sent test packets and a quantity of received test packets respectively.

(2) Latency:

A latency of a single test packet may be represented as follows:

$$delay_i = T_{i,recv} - T_{i,send} \qquad (2),$$

where
$delay_i$ represents a latency of an $i^{th}$ test packet, $T_{i, recv}$ represents a time at which the $i^{th}$ test packet is received, and $T_{i, send}$ represents a time at which the $i^{th}$ test packet is sent.

A latency of a whole test path may be obtained by averaging latencies of all test packets on the test path:

$$delay = \frac{1}{N}\sum_{i=1}^{N} delay_i = \frac{1}{N}\sum_{i=1}^{N}(T_{i,recv} - T_{i,send}) \qquad (3),$$

where
$delay$ represents a latency of a test path, N represents a quantity of all test packets that are received on the test path, and N is a positive integer greater than or equal to 1.

(3) Jitter:

Latencies of test packets on a transmission path are different, and the difference is a jitter between test packets. A jitter between two test packets may be defined as follows:

$$jitter_i = abs(delay_{i+1} - delay_i) \qquad (4),$$

where
$abs(\_)$ represents obtaining an absolute value, $delay_{i+1}$ represents a latency of an $i+1^{th}$ test packet, $delay_i$ represents a latency of an $i^{th}$ test packet, and $jitter_i$ represents a jitter between the $i+1^{th}$ test packet and the $i^{th}$ test packet.

A jitter of a whole test path is obtained by averaging jitters of all test packets:

$$jitter = \frac{1}{N-1}\sum_{i=1}^{N-1} jitter_i = \frac{1}{N-1}\sum_{i=1}^{N-1} abs(delay_{i+1} - delay_i) \qquad (5),$$

where
$jitter$ represents a jitter of a test path.

(4) Out-of-order rate:

Similar to a packet loss rate, for a single test packet, an out-of-order rate is meaningless. A cache sequence is defined to obtain a quantity of out-of-order test packets, and the quantity of out-of-order test packets is equal to an accumulative quantity of test packets that are stored in the cache sequence. Further, the following formula holds true: an out-of-order rate = a quantity of out-of-order test packets/a quantity of all test packets that are sent on a test path.

As shown in FIG. 1, limited by a check point quantity and location, network performance of a link can be obtained only by determining network performance of a test path. Network performance measurement of a current hop link relies on network performance of a previous hop, and a proportion of an upstream link to the whole test path is greater than or equal to a proportion of a downstream tested link to the whole test path, that is, upstream link network performance fluctuation seriously affects network performance measurement of the downstream link. Consequently, a network performance measurement result of the downstream link has a relatively large error.

FIG. 2A is a schematic flowchart of a first network performance check method embodiment according to this application. This embodiment may be executed by a network performance check apparatus configured in a server. The apparatus may be implemented by software and/or hardware. As shown in FIG. 2A, the method in this embodiment may include the following steps.

Step S201: Send a first group of test packets and a second group of test packets.

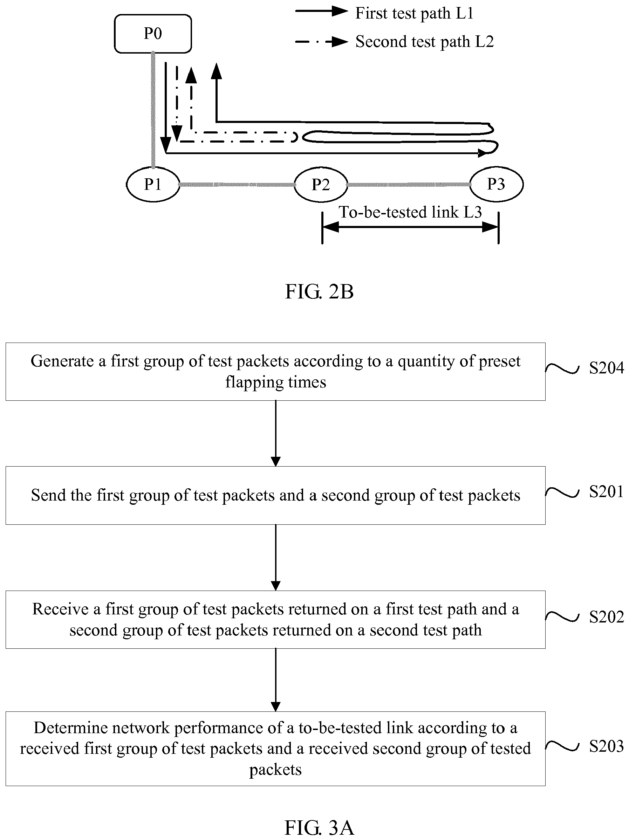

FIG. 2B is a schematic diagram of an application scenario of the network performance check method according to this application. A network shown in FIG. 2B is an all-IP network, and a segment routing (Segment routing, SR for short) protocol is used on the network. P0 represents the network performance check apparatus, and P1, P2, and P3 represent routers or a relays. For ease of description, FIG. 2B shows a first test path L1 <P0, P1, P2, P3, P2, P3, P2, P1, P0> and a second test path L2 <P0, P1, P2, P1, P0>. The first test path L1 includes the second test path L2 and a to-be-tested link L3. Certainly, the network performance check method in this application may be also applied to a network structure in another form. This is not limited in this embodiment of this application.

In this step, as shown in FIG. 2B, the network performance check apparatus sends the first group of test packets and the second group of test packets, where the first group of test packets is used to test the first test path L1, the second group of test packets is used to test the second test path L2, and the first test path L1 includes the second test path L2 and the to-be-tested link L3. Optionally, each first test packet in the first group of test packets carries a test path identifier 1 (used to indicate the first test path L1 tested by using the first test packet), and each second test packet in the second group of test packets carries a test path identifier 2 (used to indicate the second test path L2 tested by using the second test packet).

Step S202: Receive a first group of test packets returned on a first test path and a second group of test packets returned on a second test path.

In this step, the network performance check apparatus receives the first group of test packets returned on the first test path L1 and the second group of test packets returned on the second test path L2. The first group of test packets flaps on the to-be-tested link according to a quantity of preset flapping times. As shown in FIG. 2B, for example, the quantity of preset flapping times is two, and each first test packet in the first group of test packets flaps on the to-be-tested link L3 (for example, P2->P3, and P3->P2; P2->P3, and P3->P2). It can be learnt that in this embodiment of this application, a proportion of the to-be-tested link is much greater than that of an upstream link. This reduces impact of upstream link network performance fluctuation on network performance measurement of the to-be-tested link.

Step S203: Determine network performance of a to-be-tested link according to a received first group of test packets and a received second group of test packets.

In this step, the network performance check apparatus determines network performance of the to-be-tested link L3 according to the received first group of test packets and the received second group of test packets. Optionally, the network performance check apparatus determines network performance of the first test path L1 according to the received first group of test packets, and determines network performance of the second test path L2 according to the received second group of test packets; and further, determines the network performance of the to-be-tested link according to the network performance of the first test path L1, the network performance of the second test path L2, and the quantity of preset flapping times. It can be learnt that in this embodiment of this application, the first group of test packets flaps on the to-be-tested link according to the quantity of preset flapping times, so that a proportion of the to-be-tested link is much greater than that of an upstream link (for example, a link P1->P2 and a link P2->P1 shown in FIG. 2B). This reduces impact of upstream link network performance fluctuation on network performance measurement of the to-be-tested link, and reduces an error in a network performance measurement result of the to-be-tested link.

Optionally, the network performance includes one or more of the following: a latency, a jitter, a packet loss rate, or an out-of-order rate. Certainly, the network performance in this application may further include other network performance. This is not limited in this embodiment of this application.

In this embodiment of this application, the first group of test packets used to test the first test path and the second group of test packets used to test the second test path are sent, where the first test path includes the second test path and the to-be-tested link; further, the first group of test packets returned on the first test path (the first group of test packets flaps on the to-be-tested link according to the quantity of preset flapping times) and the second group of test packets returned on the second test path are received; and the network performance of the to-be-tested link is determined according to the received first group of test packets and the received second group of test packets. It can be learnt that in this embodiment of this application, the first test packet flaps on the to-be-tested link, to increase a proportion of the to-be-tested link to the whole first test path (that is, a proportion of the to-be-tested link is greater than that of an upstream link). This reduces impact of upstream link network performance (such as network performance of the second test path) fluctuation on network performance measurement of the to-be-tested link, so that a network performance measurement result of the to-be-tested link is more accurate.

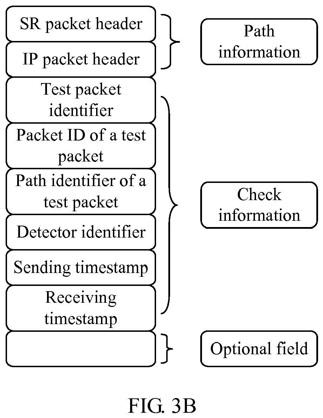

FIG. 3A is a schematic flowchart of a second network performance check method embodiment according to this application. FIG. 3B is a schematic diagram of a test packet format according to this application. As shown in FIG. 3A, based on the foregoing embodiment, before step S201, the following step is further included.

Step S204: Generate the first group of test packets according to a quantity of preset flapping times.

In this embodiment, before sending the first group of test packets and the second group of test packets, the network performance check apparatus generates the first group of test packets according to the quantity of preset flapping times. Each first test packet in the first group of test packets carries at least one first link tag group and at least one second link tag group that are corresponding to the to-be-tested link, where each first link tag group includes M same first link tags, each second link tag group includes M same second link tags, a value of M is equal to the quantity of preset flapping times, the first link tag is used to indicate a next hop target node of the first test packet in a forward transmission direction (that is, in a direction in which the network performance check apparatus sends the test packet), and the second link tag is used to indicate a next hop target node of the first test packet in a reverse transmission direction (that is, in a direction in which the network performance check apparatus receives the test packet). Optionally, all of the first link tags included in the first link tag group and the second link tags included in the second link tag group may be carried in an SR packet header (as shown in FIG. 3B) of the first test packet, where the first link tag group and the second link tag group are corresponding to the to-be-tested link. Therefore, after receiving the first test packet, a node on the to-be-tested link forwards the first test packet according to the link tags included in the SR packet header, and the first test packet flaps on the to-be-tested link. This increases a proportion of the to-be-tested link to the whole first test path (that is, a proportion of the to-be-tested link is greater than that of an upstream link), and therefore reduces impact of upstream link network performance fluctuation on network performance measurement of the to-be-tested link.

For example, as shown in FIG. 2B, the quantity of a quantity of preset flapping times is two, and a first test packet flaps on the to-be-tested link L3 (for example, P2->P3, and P3->P2; P2->P3, and P3->P2); each first test packet carries a first link tag group including two same first link tags (for example, link tags P2->P3) and a second link tag group including two same second link tags (for example, link tags P3->P2). For another example, the quantity of a quantity of preset flapping times is two, and a first test packet flaps on the to-be-tested link (for example, P2->P3, P3->P4, P4->P3, and P3->P2; P2->P3, P3->P4, P4->P3, and P3->P2); each first test packet carries a first link tag group 1 including two same first link tags (for example, link tags P2->P3), a first link tag group 2 including two same first link tags (for example, link tags P3->P4), a second link tag group 1 including two same second link tags (for example, link tags P3->P2), and a second link tag group 2 including two same second link tags (for example, link tags P4->P3).

To distinguish between test packets sent by multiple network performance check apparatuses, optionally, each first test packet in the first group of test packets and each second test packet in the second group of test packets may carry a detector identifier. The detector identifier is used to indicate a network performance check apparatus sending a corresponding test packet. For example, a detector identifier carried in the first test packet is used to indicate a network performance check apparatus sending the first test packet, and a detector identifier carried in the second test packet is used to indicate a network performance check apparatus sending the second test packet.

As shown in FIG. 3B, a test packet includes a path information field (used to control a forwarding path of a test packet), a check information field, and an optional field. The path information field includes an SR packet header (including an SR tag) and an IP packet header. The check information field includes necessary information used to determine network performance of a test path. For example, a test packet identifier is used to uniquely identify a test packet (that is, filter out another unrelated packet); a detector identifier is used to identify a network performance check apparatus sending a test packet; a test packet path identifier is used to identify a test path to be tested by using a test packet; a packet identity (Identity, ID for short) of a test packet is used to distinguish between different test packets on a same test path; a sending timestamp is used to indicate a time at which a test packet is sent; and a receiving timestamp is used to indicate a time at which a test packet is received.

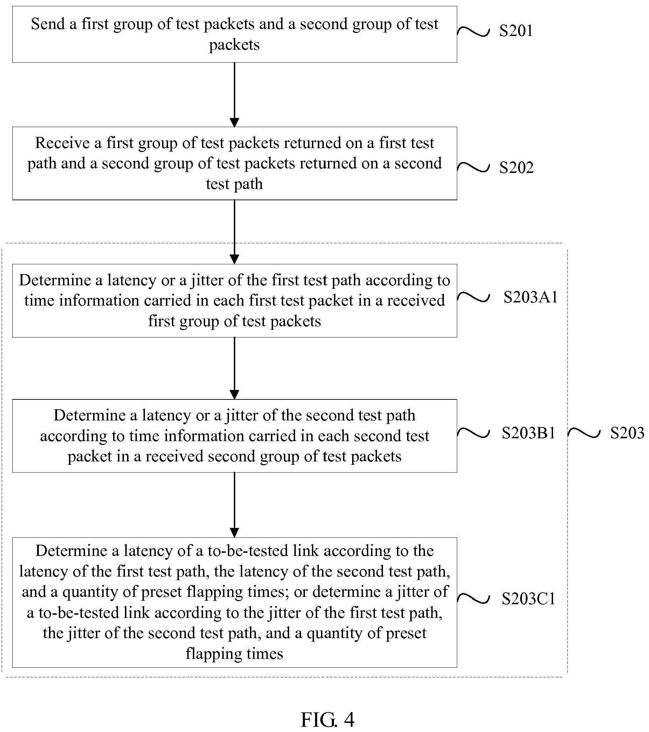

FIG. 4 is a schematic flowchart of a third network performance check method embodiment according to this application. As shown in FIG. 4, based on the foregoing embodiments, step S203 includes the following steps.

Step S203A1: Determine a latency or a jitter of the first test path according to time information carried in each first test packet in the received first group of test packets.

Optionally, each first test packet carries a sending timestamp and a receiving timestamp. The sending timestamp is used to indicate a time at which the first test packet is sent by the network performance check apparatus, and the receiving timestamp is used to indicate a time at which the first test packet is received by the network performance check apparatus.

In this step, optionally, the network performance check apparatus determines, by using the formula (3), the latency of the first test path L1 according to the time information (for example, the sending timestamp and the receiving timestamp) carried in each first test packet in the received first group of test packets.

Optionally, the network performance check apparatus determines, by using the formulas (2) and (4), the jitter of the first test path L1 according to the time information (for example, the sending timestamp and the receiving timestamp) carried in each first test packet in the received first group of test packets.

Step S203B1: Determine a latency or a jitter of the second test path according to time information carried in each second test packet in the received second group of test packets.

Optionally, each second test packet carries a sending timestamp and a receiving timestamp. The sending timestamp is used to indicate a time at which the second test packet is sent by the network performance check apparatus, and the receiving timestamp is used to indicate a time at which the second test packet is received by the network performance check apparatus.

In this step, optionally, the network performance check apparatus determines, by using the formula (3), the latency of the second test path L2 according to the time information (for example, the sending timestamp and the receiving timestamp) carried in each second test packet in the received second group of test packets.

Optionally, the network performance check apparatus determines, by using the formulas (2), (4), and (5), the jitter of the second test path L2 according to the time information (for example, the sending timestamp and the receiving timestamp) carried in each second test packet in the received second group of test packets.

Step S203C1: Determine a latency of the to-be-tested link according to the latency of the first test path, the latency of the second test path, and a quantity of preset flapping times; or determine a jitter of the to-be-tested link according to the jitter of the first test path, the jitter of the second test path, and a quantity of preset flapping times.

In this embodiment, because the first test packet flaps on the to-be-tested link L3 according to the quantity of preset flapping times, a flapping factor needs to be considered when the network performance of the to-be-tested link L3 is determined by means of calculation. Optionally, it is assumed that the first test packet flaps on the to-be-tested link L3 for n times (that is, the quantity of preset flapping times is n). The latency $delay_{L3}$ of the to-be-tested link L3 is determined according to the latency $delay_{L1}$ of the first test path L1, the latency $L_2$ of the second test path L2, and the quantity of preset flapping times n by using the following formulas (6) and (7):

$$delay_{L1} = 2 * delay_{L2} + 2n * delay_{L3} \tag{6}$$

$$delay_{L3} = \frac{delay_{L1} - 2 * delay_{L2}}{2 * n} \tag{7}$$

Optionally, it is assumed that the first test packet flaps on the to-be-tested link L3 for n times (that is, the quantity of preset flapping times is n). The jitter $jitter_{L3}$ of the to-be-tested link L3 is determined according to the latency $jitter_{L1,}$ of the first test path L1, the latency $jitter_{L2}$ of the second test path L2, and the quantity of preset flapping times n by using the following formulas (8) and (9):

$$jitter_{L1} = 2 * jitter_{L2} + 2n * jitter_{L3} \tag{8}$$

$$jitter_{L3} = \frac{jitter_{L1} - 2 * jitter_{L2}}{2 * n} \tag{9}$$

In conclusion, because the first test packet flaps on the to-be-tested link L3 for n times, averaging needs to be performed many times during calculation of the latency or the jitter of the to-be-tested link L3. This reduces impact of upstream link latency or jitter (such as the latency or the jitter of the second test path L2) fluctuation on the network performance measurement of the to-be-tested link L3, so that a latency or jitter measurement result of the to-be-tested link L3 is more accurate.

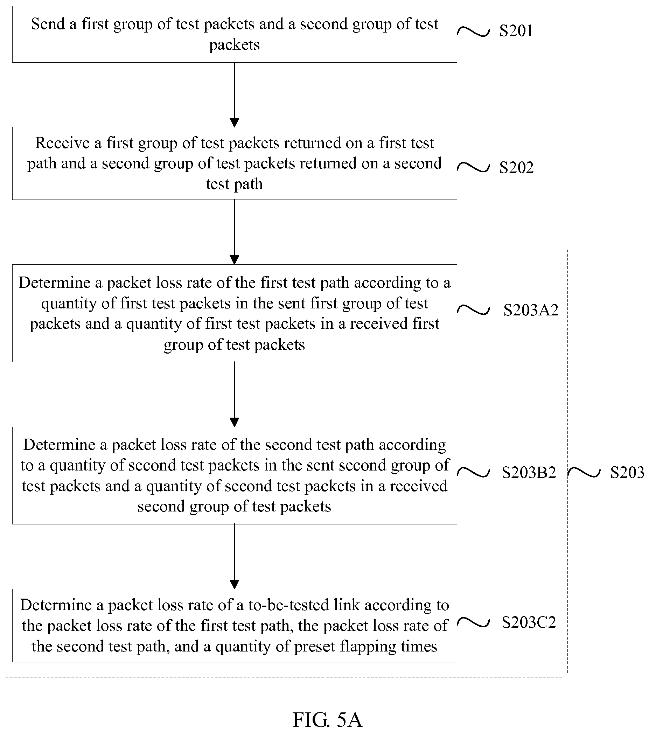

FIG. 5A is a schematic flowchart of a fourth network performance check method embodiment according to this application. As shown in FIG. 5A, based on the foregoing embodiments, step S203 includes the following steps.

Step S203A2: Determine a packet loss rate of the first test path according to a quantity of first test packets in the sent first group of test packets and a quantity of first test packets in the received first group of test packets.

In this step, the network performance check apparatus determines, by using the formula (1), the packet loss rate of the first test path L1 according to the quantity of first test packets in the sent first group of test packets and the quantity of first test packets in the received first group of test packets.

Step S203B2: Determine a packet loss rate of the second test path according to a quantity of second test packets in the sent second group of test packets and a quantity of second test packets in the received second group of test packets.

In this step, the network performance check apparatus determines, by using the formula (1), the packet loss rate of the second test path L2 according to the quantity of second test packets in the sent second group of test packets and the quantity of second test packets in the received second group of test packets.

Step S203C2: Determine a packet loss rate of the to-be-tested link according to the packet loss rate of the first test path, the packet loss rate of the second test path, and a quantity of preset flapping times.

In this embodiment, because the first test packet flaps on the to-be-tested link L3 according to the quantity of preset flapping times, a flapping factor needs to be considered when the network performance of the to-be-tested link L3 is determined by means of calculation. Optionally, it is assumed that the first test packet flaps on the to-be-tested link L3 for n times (that is, the quantity of preset flapping times is n). The packet loss rate $plr_{L3}$ of the to-be-tested link L3 is determined according to the packet loss rate $plr_{L1}$ of the first test path L1, the packet loss rate $plr_{L2}$ of the second test path L2, and the quantity of preset flapping times n by using the following formulas (10) and (11):

$$plr_{L1} = 1 - (1 - plr_{L2})^2 (1 - plr_{L3})^{2n} \qquad (10)$$

$$plr_{L3} = 1 - ((1 - plr_{L1})/(1 - plr_{L2})^2)^{1/2n} \qquad (11)$$

In conclusion, because the first test packet flaps on the to-be-tested link L3 for n times, an $n^{th}$ root needs to be obtained during calculation of the packet loss rate of the to-be-tested link L3. This reduces impact of upstream link packet loss rate (such as the packet loss rate of the second test path L2) fluctuation on the network performance measurement of the to-be-tested link L3, so that a measurement result of the packet loss rate of the to-be-tested link L3 is more accurate.

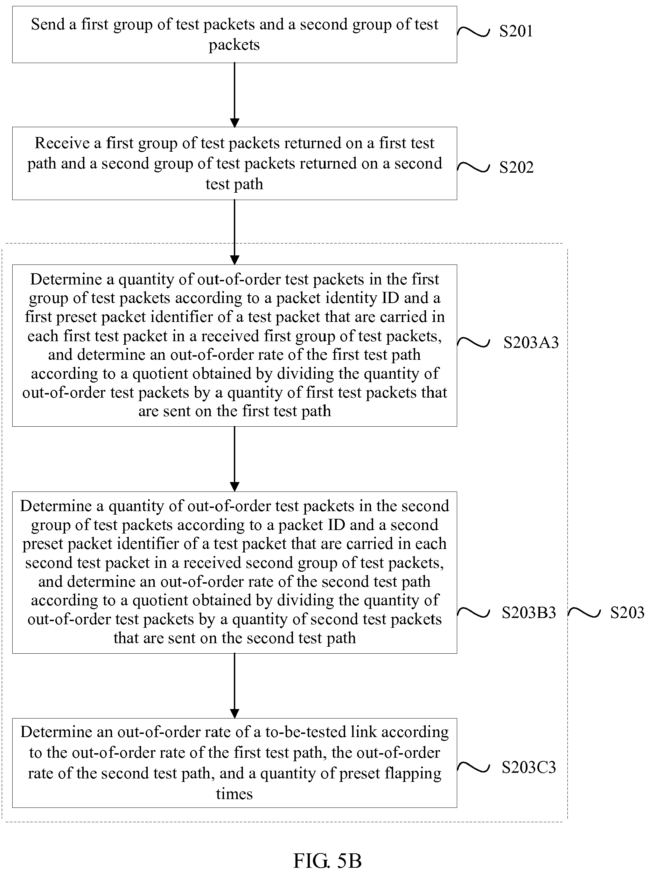

FIG. 5B is a schematic flowchart of a fifth network performance check method embodiment according to this application. As shown in FIG. 5B, based on the foregoing embodiments, step S203 includes the following steps.

Step S203A3: Determine a quantity of out-of-order test packets in the first group of test packets according to a first preset packet identifier and a packet identity ID of a test packet that is carried in each first test packet in the received first group of test packets, and determine an out-of-order rate of the first test path according to a quotient obtained by dividing the quantity of out-of-order test packets by a quantity of first test packets that are sent on the first test path.

In this step, the network performance check apparatus determines, according to the first preset packet identifier (such as a packet identifier of a to-be-processed test packet) and the packet ID of the test packet that is carried in each first test packet in the received first group of test packets, whether the packet ID of the currently received first test packet is the first preset packet identifier; and if the packet ID of the currently received first test packet is the first preset packet identifier (that is, the currently received first test packet is a test packet that arrives beforehand), stores the currently received first test packet to a cache sequence (the cache sequence is used to store the out-of-order first test packet). Further, the network performance check apparatus determines the quantity of out-of-order test packets in the first group of test packets according to a quantity of first test packets included in the cache sequence, and determines the out-of-order rate of the first test path L1 according to the quotient obtained by dividing the quantity of out-of-order test packets by the quantity of first test packets that are all sent on the first test path.

Step S203B3: Determine a quantity of out-of-order test packets in the second group of test packets according to a second preset packet identifier and a packet ID of a test packet that is carried in each second test packet in the received second group of test packets, and determine an out-of-order rate of the second test path according to a quotient obtained by dividing the quantity of out-of-order test packets by a quantity of second test packets that are sent on the second test path.

In this step, the network performance check apparatus determines, according to the second preset packet identifier (such as a packet identifier of a to-be-processed test packet) and the packet ID of the test packet that is carried in each second test packet in the received second group of test packets, whether the packet ID of the currently received second test packet is the second preset packet identifier; and if the packet ID of the currently received second test packet is the second preset packet identifier (that is, the currently received second test packet is a test packet that arrives beforehand), stores the currently received second test packet to a cache sequence (the cache sequence is used to store the out-of-order second test packet). Further, the network performance check apparatus determines the quantity of out-of-order test packets in the second group of test packets according to a quantity of second test packets included in the cache sequence, and determines the out-of-order rate of the second test path L2 according to the quotient obtained by dividing the quantity of out-of-order test packets by the quantity of second test packets that are all sent on the second test path.

Step S203C3: Determine an out-of-order rate of the to-be-tested link according to the out-of-order rate of the first test path, the out-of-order rate of the second test path, and a quantity of preset flapping times.

In this embodiment, because the first test packet flaps on the to-be-tested link L3 according to the quantity of preset flapping times, a flapping factor needs to be considered when the network performance of the to-be-tested link L3 is determined by means of calculation. Optionally, it is assumed that the first test packet flaps on the to-be-tested link L3 for n times (that is, the quantity of preset flapping times is n). The out-of-order rate $disor_{L3}$ of the to-be-tested link L3 is determined according to the out-of-order rate $disor_{L1}$ of the first test path L1, the out-of-order rate $disor_{L2}$ of the second test path L2, and the quantity of preset flapping times n by using the following formulas (12) and (13):

$$disor_{L1} = 1 - (1 - disor_{L2})^2 (1 - disor_{L3})^{2n} \qquad (12)$$

$$disor_{L3} = 1 - ((1 - disor_{L1})/(1 - disor_{L2})^2)^{1/2n} \qquad (13)$$

In conclusion, because the first test packet flaps on the to-be-tested link L3 for n times, an $n^{th}$ root needs to be obtained during calculation of the out-of-order rate of the to-be-tested link L3. This reduces impact of upstream link out-of-order rate (such as the out-of-order rate of the second test path L2) fluctuation on the network performance measurement of the to-be-tested link L3, so that a measurement result of the out-of-order rate of the to-be-tested link L3 is more accurate.

According to the foregoing formulas (2) to (5), calculation of a latency and a jitter of a test path relies entirely on a time at which a test packet is sent and a time at which a test packet is received. Test packets are sequentially sent by the network performance check apparatus one by one, and it may be considered that a time at which the test packet is sent is accurate. Therefore, marking each test packet with a proper receiving timestamp directly affects calculation of a latency and a jitter of a test path.

There is an out-of-order packet on a network. Therefore, when processing data, an application program generally stores all received data to a buffer, and performs sorting processing on the data in the buffer, so that the data is further processed sequentially. For example, it is assumed that video data in a $3^{rd}$ second arrives ahead of video data in a $1^{st}$ second. Instead of directly processing the video data in the $3^{rd}$ second, the application program waits until the video data in the $1^{st}$ second arrives and first processes the video data in the $1^{st}$ second according to a sequence. Therefore, a delay felt by a user is longer than an actual latency of video data (that is, a latency between a time at which video data is sent from a transmit end and a time at which the video data reaches a receive end).

Similar to the video data, a time at which a test packet reaches a receiving node may not be an actual processing time. To make a calculated latency closer to that actually felt by a user, impact of disorder on a latency and/or a jitter needs to be considered. The following describes how to mark a test packet with a proper receiving timestamp when disorder occurs, so that a more accurate latency and/or jitter measurement result is obtained.

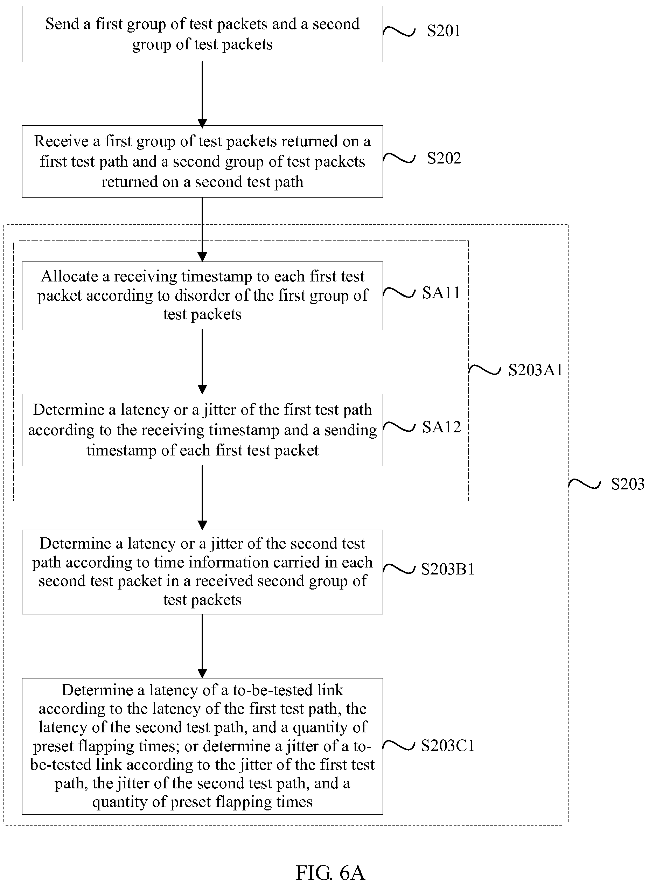

FIG. 6A is a schematic flowchart of a sixth network performance check method embodiment according to this application. As shown in FIG. 6A, based on the foregoing embodiments, step S203A1 includes the following steps.

Step SA11: Allocate a receiving timestamp to each first test packet according to disorder of the first group of test packets.

In this step, the network performance check apparatus allocates a proper receiving timestamp to each first test packet according to the disorder of the first group of test packets, to make a calculated latency and/or jitter closer to that actually felt by a user.

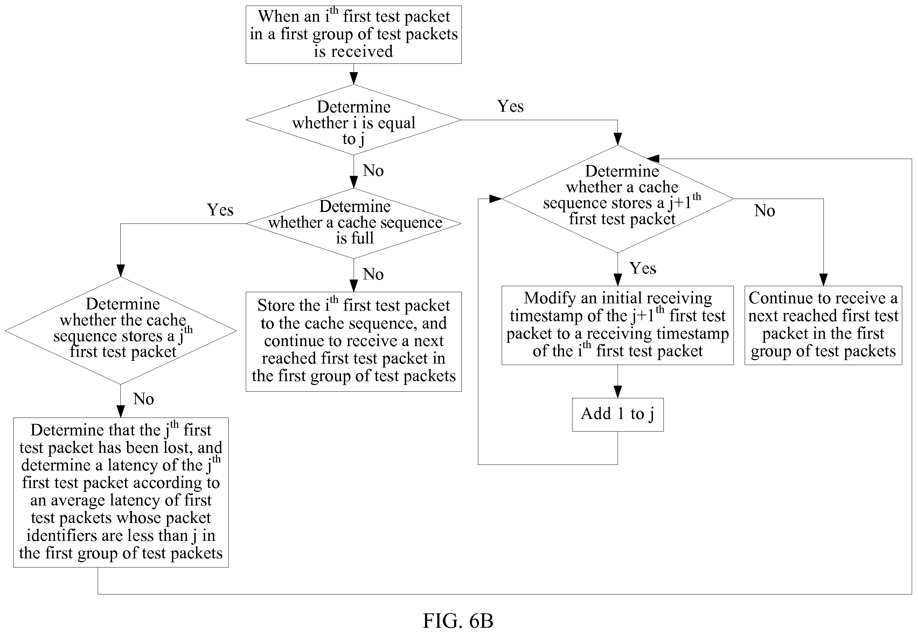

FIG. 6B is a schematic flowchart of allocating a proper receiving timestamp to each first test packet by a network performance check apparatus according to an embodiment of this application. As shown in FIG. 6B, when receiving an $i^{th}$ first test packet in the first group of test packets, the network performance check apparatus determines whether i is equal to j. i is a packet identifier of a currently received first test packet, and j is a packet identifier of a to-be-processed test packet (that is, the network performance check apparatus has allocated a proper receiving timestamp to a $j-1^{th}$ first test packet), i is an integer greater than 0, and j is an integer greater than 1.

(1) If i is equal to j (that is, the currently received $i^{th}$ first test packet is a to-be-processed packet), the network performance check apparatus determines whether the cache sequence stores a $j+1^{th}$ first test packet. The cache sequence is used to store an out-of-order first test packet (that is, a first test packet that arrives beforehand), and a packet identifier of the out-of-order first test packet is greater than j. If the cache sequence stores the $j+1^{th}$ first test packet (that is, the $j+1^{th}$ first test packet reaches the network performance check apparatus ahead of a $j^{th}$ first test packet), an initial receiving timestamp of the $j+1^{th}$ first test packet is modified to a receiving timestamp of the $i^{th}$ first test packet (that is, the $j^{th}$ first test packet), and 1 is added to j; a step of determining whether the cache sequence stores a $j+1^{th}$ first test packet is performed until the cache sequence does not store the $j+1^{th}$ first test packet; and a next reached first test packet in the first group of test packets continues to be received. Optionally, after the initial receiving timestamp of the $j+1^{th}$ first test packet is modified to the receiving timestamp of the $i^{th}$ first test packet, the j+1th first test packet is deleted from the cache sequence, so that the cache sequence can store another first test packet that arrives beforehand.

(2) If i is not equal to j (that is, the currently received ith first test packet is not a to-be-processed packet), the network performance check apparatus determines whether the cache sequence is filled up. (2a) If the cache sequence is not filled up, the ith first test packet is stored to the cache sequence, and a next reached first test packet in the first group of test packets continues to be received. (2b) If the cache sequence is filled up, it is determined whether the cache sequence stores a jth first test packet (that is, a to-be-processed test packet). If the cache sequence does not store the jth first test packet, it is determined that the jth first test packet has been lost; a latency of the jth first test packet is determined according to an average latency of first test packets whose packet identifiers are less than j in the first group of test packets; and the step of determining whether the cache sequence stores a j+1th first test packet is performed. Optionally, the network performance check apparatus uses, as the latency of the jth first test packet, a product of a preset coefficient (for example, 1.5) and the average latency of the first test packets whose packet identifiers are less than j in the first group of test packets. Certainly, the latency of the jth first test packet may be alternatively determined in another manner according to the average latency of the first test packets whose packet identifiers are less than j in the first group of test packets. This is not limited in this embodiment of this application.

It can be learnt that the network performance check apparatus marks each first test packet in the received first group of test packets with a proper receiving timestamp, and assigns a proper latency to a lost first test packet.

Step SA12: Determine the latency or the jitter of the first test path according to the receiving timestamp and a sending timestamp of each first test packet.

In this step, the network performance check apparatus determines the latency or the jitter of the first test path according to the receiving timestamp (that is, a proper receiving timestamp allocated to each first test packet according to the disorder of the first group of test packets) and the sending timestamp of each first test packet. Optionally, for a specific calculation manner, reference is made to the related description of step S203A1 in the third network performance check method embodiment of this application. In this embodiment of this application, details are not described herein again.

In this embodiment, the receiving timestamp is allocated to each first test packet according to the disorder of the first group of test packets; and further, the latency or the jitter of the first test path is calculated according to the receiving timestamp (that is, a proper receiving timestamp allocated to each first test packet according to the disorder of the first group of test packets) and the sending timestamp of each first test packet, to obtain a more accurate measurement result, so that accuracy of a latency or jitter measurement result of the to-be-tested link is further improved.

Optionally, step S203B1 (that is, determining a latency or a jitter of the second test path according to time information carried in each second test packet in the received second group of test packets) in the third network performance check method embodiment of this application includes: allocating a receiving timestamp to each second test packet according to disorder of the second group of test packets; and determining the latency or the jitter of the second test path according to the receiving timestamp and a sending timestamp of each second test packet. A latency or jitter measurement result of the second test path obtained by means of calculation according to the foregoing manner is more accurate, so that accuracy of a latency or jitter measurement result of the to-be-tested link is further improved. Optionally, for a specific implementation, reference may be made to the related descriptions of step SA11 and step SA12 in the sixth network performance check method embodiment of this application. In this embodiment of this application, details are not described herein again.

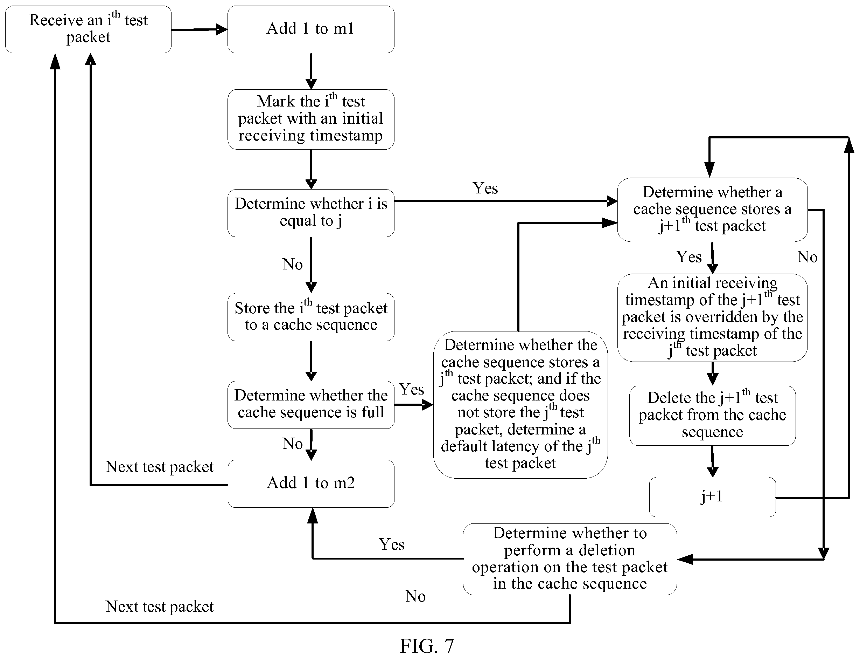

FIG. 7 is a schematic flowchart of allocating a proper receiving timestamp to each test packet by a network performance check apparatus according to an embodiment of this application. It is assumed that the network performance check apparatus allocates proper receiving timestamps to test packets one by one from the 1st test packet, j represents a packet identifier of a to-be-processed test packet (that is, the network performance check apparatus has allocated a proper receiving timestamp to a test packet whose packet identifier is less than or equal to j-1), i represents a packet identifier of a test packet currently received by the network performance check apparatus, ml represents a total quantity of test packets received by the network performance check apparatus, and m2 represents a total quantity of test packets that have been stored in the cache sequence.

As shown in FIG. 7, based on the foregoing embodiments, a procedure for allocating a proper receiving timestamp to each test packet by the network performance check apparatus in this embodiment is as follows.

(1) When receiving an ith test packet, the network performance check apparatus adds 1 to ml, and marks the ith test packet with an initial receiving timestamp (used to indicate a time at which the ith test packet is received).

(2) The network performance check apparatus determines whether i is equal to j; and if i is not equal to j (that is, the currently received ith test packet is not a to-be-processed packet), stores the ith test packet to the cache sequence, and determines whether the cache sequence is filled up. If the cache sequence is not filled up, 1 is added to m2, and a next reached test packet continues to be received. If the cache sequence is filled up, it is determined whether the cache sequence stores a $j^{th}$ test packet; and if the cache sequence does not store the $j^{th}$ test packet, it is determined that the $j^{th}$ test packet has been lost. In this case, a time at which the $j^{th}$ test packet is received cannot be determined. To facilitate calculation of a latency of a test path, a default latency of the $j^{th}$ test packet is determined according to a product of a preset coefficient (for example, 1.5) and an average latency of reached test packets whose packet identifiers are less than j. Further, it is determined whether the cache sequence stores a $j+1^{th}$ test packet.

(3) If i is equal to j (that is, the currently received $i^{th}$ test packet is a to-be-processed packet), the network performance check apparatus determines whether the cache sequence stores a $j+1^{th}$ test packet (that is, determines whether the $j+1^{th}$ test packet arrives ahead of the $j^{th}$ test packet). If the cache sequence stores the $j+1^{th}$ test packet (that is, the $j+1^{th}$ test packet reaches the network performance check apparatus ahead of the $j^{th}$ test packet), an initial receiving timestamp of the $j+1^{th}$ test packet is overwritten by the receiving timestamp of the $j^{th}$ test packet; the $j+1^{th}$ test packet is deleted from the cache sequence, and 1 is added to j; and a step of determining whether the cache sequence stores a $j+1^{th}$ test packet is performed.

(4) The foregoing step "determining whether the cache sequence stores a $j+1^{th}$ test packet" continues to be performed until the cache sequence does not store the $j+1^{th}$ test packet; and a next reached test packet continues to be received. Optionally, before a next reached test packet continues to be received, if a deletion operation has been performed on a test packet in the cache sequence, 1 is added to m2; otherwise, 1 does not need to be added to m2.

(5) The network performance check apparatus calculates an average latency of received test packets in real time; and when no new test packet is received within a time period that is five times of the average latency, determines that test packet receiving is complete.

In conclusion, in this embodiment, the network performance check apparatus allocates a proper receiving timestamp to each test packet according to out-of-order, to make a calculated latency closer to that actually felt by a user, so that a more accurate latency and/or jitter measurement result is obtained.

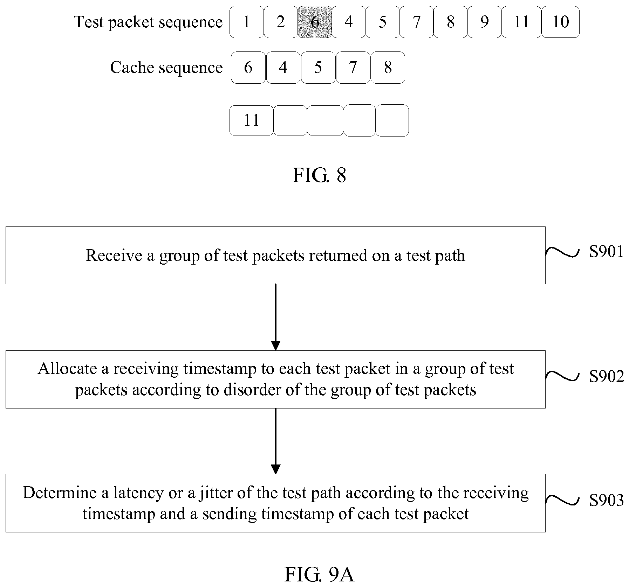

FIG. 8 is a schematic diagram of a received test packet sequence and a cache sequence according to a network performance check method embodiment of this application. With reference to FIG. 2B and FIG. 8, a procedure for allocating a proper receiving timestamp to each test packet by the network performance check apparatus is detailed as follows.

(1) Perform initialization, so that m1 is equal to 0, m2 is equal to 0, and j is equal to 1.

(2) When receiving the $1^{st}$ test packet (that is, i = 1), the network performance check apparatus adds 1 to ml (that is, ml = 1), and marks the $1^{st}$ test packet with an initial receiving timestamp (used to indicate a time at which the $1^{st}$ test packet is received). Because i is equal to j and a cache sequence is empty, a next test packet (that is, the $2^{nd}$ test packet) is directly processed. A manner of processing the $2^{st}$ test packet is similar to that of processing the $1^{st}$ test packet, and details are not described herein. After processing of the $2^{nd}$ test packet is complete, j is equal to 3, ml is equal to 2, and m2 is equal to 0.

(3) When receiving the sixth test packet (that is, i = 6), the network performance check apparatus adds 1 to ml (that is, ml = 3), and marks the sixth test packet with an initial receiving timestamp. Because i is not equal to j and the cache sequence is empty, the sixth test packet is stored to the cache sequence, 1 is added to m2 (that is, m2 = 1), a next test packet is directly processed, and the foregoing operations are repeated until the eighth test packet is stored to the cache sequence (it is assumed that the cache sequence can store five packets).

(4) At this time, the cache sequence is filled up. The network performance check apparatus determines that the third test packet has been lost, and allocates a default latency (optionally, the default latency is equal to one point five times of an average latency of the $1^{st}$ test packet and the $2^{nd}$ test packet) to the third test packet. Further, if it is determined that the cache sequence stores the fourth test packet, an initial receiving timestamp of the fourth test packet is overwritten by a receiving timestamp of the eighth test packet, the fourth test packet is deleted from the cache sequence, and 1 is added to j; corresponding processing is performed on the fifth test packet, the sixth test packet, the seventh test packet, and the eighth test packet in the cache sequence until the cache sequence does not store a test packet that arrives beforehand; and a next reached test packet (that is, a ninth test packet) continues to be received.

(5) When receiving the ninth test packet (that is, i = 9), j is equal to 9, ml is equal to 7, and m2 is equal to 5. The network performance check apparatus adds 1 to ml (that is, ml = 8), and marks the ninth test packet with an initial receiving timestamp. Because i is equal to j and the cache sequence is empty, a next test packet (that is, the eleventh test packet) is directly processed.

(6) When receiving the eleventh test packet (that is, i = 11), j is equal to 10, ml is equal to 8, and m2 is equal to 5. The network performance check apparatus adds 1 to ml (that is, ml = 9), and marks the eleventh test packet with an initial receiving timestamp. Because i is not equal to j, the eleventh test packet is stored to the cache sequence.

Because the cache sequence is not filled up, 1 is added to m2 (that is, m2 = 6), and a next test packet (that is, the tenth test packet) is directly processed.

(7) When receiving the tenth test packet (that is, i = 10), the network performance check apparatus adds 1 to ml (that is, ml = 10), and marks the tenth test packet with an initial receiving timestamp (in this case, j = 9). Because i is equal to j, if it is determined that the cache sequence stores the eleventh test packet, an initial receiving timestamp of the eleventh test packet is overwritten by a receiving timestamp of the tenth test packet, and the eleventh test packet is deleted from the cache sequence (1 is added to m2 because a deletion operation has been performed). In this case, j is equal to 12, ml is equal to 10, and m2 is equal to 7.

It can be learnt that the network performance check apparatus marks each received test packet with a proper receiving timestamp, and assigns a proper latency to a lost test packet, so that a latency/jitter measurement result of the test path is more accurate. For example, although the third test packet has been lost, the network performance check apparatus allocates a default latency to the third test packet, so that calculation of a jitter between the 2$^{nd}$ test packet and the third test packet and a jitter between the third test packet and the fourth test packet is not affected.

According to the foregoing formulas (2) to (5), calculation of a latency and a jitter of a test path relies entirely on a time at which a test packet is sent and a time at which a test packet is received. Test packets are sequentially sent by the network performance check apparatus one by one, and it may be considered that a time at which the test packet is sent is accurate. Therefore, marking each test packet with a proper receiving timestamp directly affects calculation of a latency and a jitter of a test path.

There is an out-of-order packet on a network. Therefore, when processing data, an application program generally stores all received data to a buffer, and performs sorting processing on the data in the buffer, so that the data is further processed sequentially. For example, it is assumed that video data in a 3$^{rd}$ second arrives ahead of video data in a 1$^{st}$ second. Instead of directly processing the video data in the 3$^{rd}$ second, the application program waits until the video data in the 1$^{st}$ second arrives and first processes the video data in the 1$^{st}$ second according to a sequence. Therefore, a delay felt by a user is longer than an actual latency of video data (that is, a latency between a time at which video data is sent from a transmit end and a time at which the video data reaches a receive end).

Similar to the video data, a time at which a test packet reaches a receiving node may not be an actual processing time. To make a calculated latency closer to that actually felt by a user, impact of disorder on a latency and/or a jitter needs to be considered. The following describes how to mark a test packet with a proper receiving timestamp when disorder occurs, so that a more accurate latency and/or jitter measurement result is obtained.

FIG. 9A is a schematic flowchart of a seventh network performance check method embodiment according to this application. This embodiment may be executed by a network performance check apparatus configured in a server. The apparatus may be implemented by software and/or hardware. As shown in FIG. 9A, the method in this embodiment may include the following steps.

Step S901: Receive a group of test packets returned on a test path.

In this step, the network performance check apparatus receives a group of test packets returned on a test path. Optionally, each test packet in the group of test packets carries a detector identifier. The detector identifier is used to indicate a network performance check apparatus sending a corresponding test packet. For a specific packet format, reference may be made to FIG. 3B.

Step S902: Allocate a receiving timestamp to each test packet in a group of test packets according to disorder of the group of test packets.

In this step, the network performance check apparatus allocates a receiving timestamp to each test packet in the group of test packets according to the disorder of the group of test packets, to make a calculated latency and/or jitter closer to that actually felt by a user.

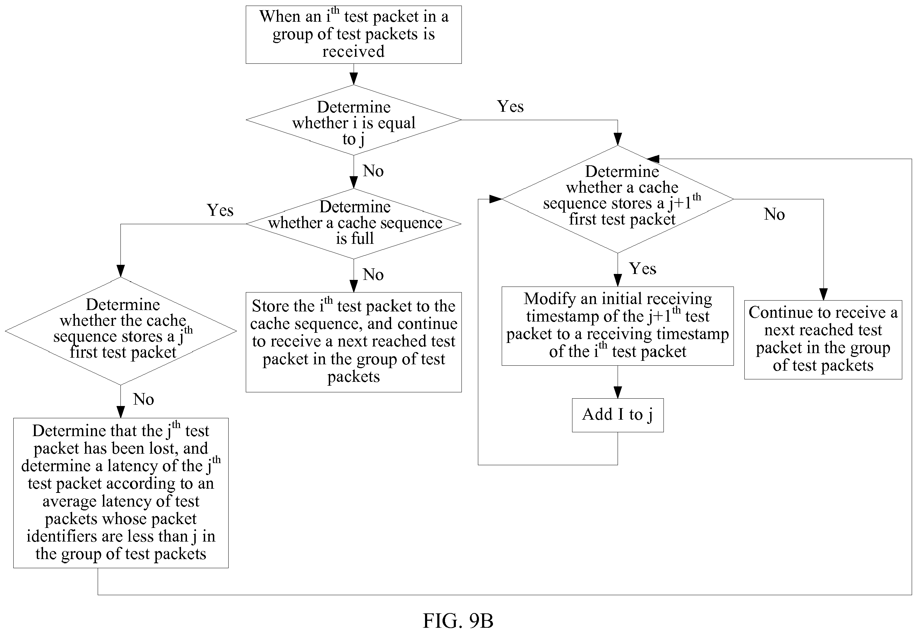

FIG. 9B is a schematic flowchart of allocating a proper receiving timestamp to each test packet by a network performance check apparatus according to an embodiment of this application. As shown in FIG. 9B, when receiving an i$^{th}$ test packet in the group of test packets, the network performance check apparatus determines whether i is equal to j. i is a packet identifier of a currently received test packet, and j is a packet identifier of a to-be-processed test packet (that is, the network performance check apparatus has allocated a proper receiving timestamp to a j-1$^{th}$ test packet).

(1) If i is equal to j (that is, the currently received i$^{th}$ test packet is a to-be-processed packet), the network performance check apparatus determines whether a cache sequence stores a j+1$^{th}$ test packet. The cache sequence is used to store an out-of-order test packet (that is, the test packet that arrives beforehand), and a packet identifier of the out-of-order test packet is greater than j. If the cache sequence stores the j+1$^{th}$ test packet (that is, the j+1$^{th}$ test packet reaches the network performance check apparatus ahead of a j$^{th}$ test packet, an initial receiving timestamp of the j+1$^{th}$ test packet is modified to a receiving timestamp of the i$^{th}$ test packet (that is, the j$^{th}$ test packet), and 1 is added to j; a step of determining whether the cache sequence stores a j+1$^{th}$ test packet is performed until the cache sequence does not store the j+1$^{th}$ test packet; and a next reached test packet in the group of test packets continues to be received. Optionally, after the initial receiving timestamp of the j+1$^{th}$ test packet is modified to the receiving timestamp of the i$^{th}$ test packet, the j+1$^{th}$ test packet is deleted from the cache sequence, so that the cache sequence can store another test packet that arrives beforehand.

(2) If i is not equal to j (that is, the currently received i$^{th}$ test packet is not a to-be-processed packet), the network performance check apparatus determines whether the cache sequence is filled up. (2a) If the cache sequence is not filled up, the i$^{th}$ test packet is stored to the cache sequence, and a next reached test packet in the group of test packets continues to be received. (2b) If the cache sequence is filled up, it is determined whether the cache sequence stores a j$^{th}$ test packet (that is, a to-be-processed test packet). If the cache sequence does not store the j$^{th}$ test packet, it is determined that the j$^{th}$ test packet has been lost; a latency of the j$^{th}$ test packet is determined according to an average latency of test packets whose packet identifiers are less than j in the group of test packets; and the step of determining whether the cache sequence stores a j+1$^{th}$ test packet is performed. Optionally, the network performance check apparatus uses a product of a preset coefficient (for example, 1.5) and the average latency of the test packets whose packet identifiers are less than j in the group of test packets, as the latency of the j$^{th}$ test packet. Certainly, the latency of the j$^{th}$ test packet may be alternatively determined in another manner according to the average latency of the test packets whose packet identifiers are less than j in the group of test packets. This is not limited in this embodiment of this application.

It can be learnt that the network performance check apparatus marks each test packet in the received group of test packets with a proper receiving timestamp, and assigns a proper latency to a lost test packet.

Step S903: Determine a latency or a jitter of the test path according to the receiving timestamp and a sending timestamp of each test packet.

In this step, the network performance check apparatus determines the latency or the jitter of the test path according to the receiving timestamp (that is, a proper receiving timestamp allocated to each test packet according to the disorder of the group of test packets) and the sending timestamp of each test packet. Optionally, for a specific calculation manner, reference is made to the related description of step S203A1 in the third network performance check method embodiment of this application. In this embodiment of this application, details are not described herein again.

In this embodiment, after the group of test packets returned on the test path is received, the receiving timestamp is allocated to each test packet according to the disorder of the group of test packets; and further, network performance of the test path is determined according to the receiving timestamp (that is, a proper receiving timestamp allocated to each test packet according to the disorder of the group of test packets) and the sending timestamp of each test packet, so that a network performance measurement result of the test path obtained by means of calculation is more accurate.

Optionally, in this embodiment of this application, for a procedure in which the network performance check apparatus allocates a proper receiving timestamp to each test packet, reference may be made to a schematic flowchart of allocating a proper receiving timestamp to each test packet by a network performance check apparatus shown in FIG. 7 and a procedure for allocating a proper receiving timestamp to each test packet by the network performance check apparatus shown in FIG. 8. Details are not described herein again.

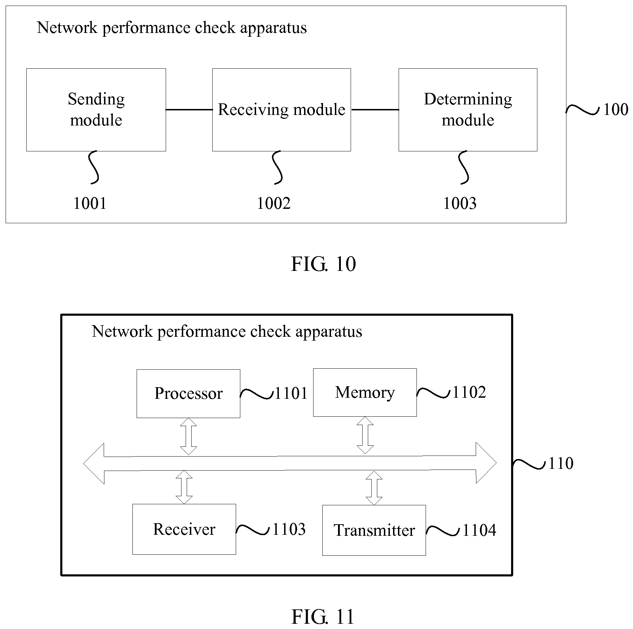

FIG. 10 is a schematic structural diagram of a first network performance check apparatus embodiment according to this application. As shown in FIG. 10, a network performance check apparatus 100 provided in this embodiment includes:

a sending module 1001, configured to send a first group of test packets and a second group of test packets, where the first group of test packets is used to test a first test path, the second group of test packets is used to test a second test path, and the first test path includes the second test path and a to-be-tested link;

a receiving module 1002, configured to receive a first group of test packets returned on the first test path and a second group of test packets returned on the second test path, where the first group of test packets flaps on the to-be-tested link according to a quantity of preset flapping times; and

a determining module 1003, configured to determine network performance of the to-be-tested link according to a received first group of test packets and a received second group of test packets.

Optionally, the apparatus further includes:

a generation module, configured to generate the first group of test packets according to the quantity of preset flapping times, where

each first test packet in the first group of test packets carries at least one first link tag group and at least one second link tag group that are corresponding to the to-be-tested link, where each first link tag group includes M same first link tags, each second link tag group includes M same second link tags, a value of M is equal to the quantity of preset flapping times, the first link tag is used to indicate a next hop target node of the first test packet in a forward transmission direction, and the second link tag is used to indicate a next hop target node of the first test packet in a reverse transmission direction.

Optionally, the determining module 1003 includes:

a first determining submodule, configured to determine a latency or a jitter of the first test path according to time information carried in each first test packet in the received first group of test packets;
a second determining submodule, configured to determine a latency or a jitter of the second test path according to time information carried in each second test packet in the received second group of test packets; and
a third determining submodule, configured to: determine a latency of the to-be-tested link according to the latency of the first test path, the latency of the second test path, and the quantity of preset flapping times; or determine a jitter of the to-be-tested link according to the jitter of the first test path, the jitter of the second test path, and the quantity of preset flapping times.

Optionally, the determining module 1003 includes:

a fourth determining submodule, configured to determine a packet loss rate of the first test path according to a quantity of first test packets in the sent first group of test packets and a quantity of first test packets in the received first group of test packets;
a fifth determining submodule, configured to determine a packet loss rate of the second test path according to a quantity of second test packets in the sent second group of test packets and a quantity of second test packets in the received second group of test packets; and
a sixth determining submodule, configured to determine a packet loss rate of the to-be-tested link according to the packet loss rate of the first test path, the packet loss rate of the second test path, and the quantity of preset flapping times.

Optionally, the determining module 1003 includes:

a seventh determining submodule, configured to: determine a quantity of out-of-order test packets in the first group of test packets according to a first preset packet identifier and a packet identity ID of a test packet that is carried in each first test packet in the received first group of test packets, and determine an out-of-order rate of the first test path according to a quotient obtained by dividing the quantity of out-of-order test packets by the quantity of first test packets that are sent on the first test path;
an eighth determining submodule, configured to: determine a quantity of out-of-order test packets in the second group of test packets according to a second preset packet identifier and a packet ID of a test packet that is carried in each second test packet in the received second group of test packets, and determine an out-of-order rate of the second test path according to a quotient obtained by dividing the quantity of out-of-order test packets by the quantity of second test packets that are sent on the second test path; and
a ninth determining submodule, configured to determine an out-of-order rate of the to-be-tested link according to the out-of-order rate of the first test path, the out-of-order rate of the second test path, and the quantity of preset flapping times.

Optionally, the first determining submodule includes:

an allocation unit, configured to allocate a receiving timestamp to each first test packet according to disorder of the first group of test packets; and
a determining unit, configured to determine the latency or the jitter of the first test path according to the receiving timestamp and a sending timestamp of each first test packet.

Optionally, the allocation unit is specifically configured to:

when the receiving module receives an $i^{th}$ first test packet in the first group of test packets, determine whether i is equal to j, where i is a packet identifier of a currently received first test packet, and j is a packet identifier of a to-be-processed packet;
if i is equal to j, determine whether a cache sequence stores a $j+1^{th}$ first test packet, where the cache sequence is used to store an out-of-order first test packet, and a packet identifier of the out-of-order first test packet is greater than j; and
if the cache sequence stores the $j+1^{th}$ first test packet, modify an initial receiving timestamp of the $j+1^{th}$ first test packet to a receiving timestamp of the $i^{th}$ first test packet, and add 1 to j; and perform a step of determining whether the cache sequence stores a $j+1^{th}$ first test packet until the cache sequence does not store the $j+1^{th}$ first test packet; and the receiving module continues to receive a next reached first test packet in the first group of test packets.

Optionally, the allocation unit is further configured to:

if i is not equal to j, determine whether the cache sequence is filled up;
if the cache sequence is not filled up, store the $i^{th}$ first test packet to the cache sequence, and the receiving module continues to receive a next reached first test packet in the first group of test packets; or
if the cache sequence is filled up, determine whether the cache sequence stores a $j^{th}$ first test packet; and
if the cache sequence does not store the $j^{th}$ first test packet, determine that the $j^{th}$ first test packet has been lost; determine a latency of the $j^{th}$ first test packet according to an average latency of first test packets whose packet identifiers are less than j in the first group of test packets; and perform the step of determining whether the cache sequence stores a $j+1^{th}$ first test packet.

Optionally, after modifying the initial receiving timestamp of the $j+1^{th}$ first test packet to the receiving timestamp of the $i^{th}$ first test packet, the allocation unit is further configured to delete the $j+1^{th}$ first test packet from the cache sequence.
The network performance check apparatus in this embodiment may be configured to execute the technical solutions in any embodiment of the network performance check method embodiments 1 to 6 of this application. An implementation principle and a technical effect of the network performance check apparatus are similar to those of the network performance check method embodiments, and details are not described herein again.
FIG. 11 is a schematic structural diagram of a second network performance check apparatus embodiment according to this application. As shown in FIG. 11, a network performance check apparatus 110 provided in this embodiment may include a processor 1101, a memory 1102, a receiver 1103, and a transmitter 1104. The memory 1102, the receiver 1103, and the transmitter 1104 are all connected to the processor 1101.
The transmitter 1104 is configured to send a first group of test packets and a second group of test packets, where the first group of test packets is used to test a first test path, the second group of test packets is used to test a second test path, and the first test path includes the second test path and a to-be-tested link. The receiver 1103 is configured to receive a first group of test packets returned on the first test path and a second group of test packets returned on the second test path, where the first group of test packets flaps on the to-be-tested link according to a quantity of preset flapping times. The memory 1102 is configured to store an executable instruction. The processor 1101 is configured to: execute the executable instruction in the memory 1102, and perform the following operation: determining network performance of the to-be-tested link according to a received first group of test packets and a received second group of test packets.
Optionally, the processor 1101 is further configured to:

generate the first group of test packets according to the quantity of preset flapping times, where
each first test packet in the first group of test packets carries at least one first link tag group and at least one second link tag group that are corresponding to the to-be-tested link, where each first link tag group includes M same first link tags, each second link tag group includes M same second link tags, a value of M is equal to the quantity of preset flapping times, the first link tag is used to indicate a next hop target node of the first test packet in a forward transmission direction, and the second link tag is used to indicate a next hop target node of the first test packet in a reverse transmission direction.

Optionally, the processor 1101 is further configured to:

determine a latency or a jitter of the first test path according to time information carried in each first test packet in the received first group of test packets;
determine a latency or a jitter of the second test path according to time information carried in each second test packet in the received second group of test packets; and
determine a latency of the to-be-tested link according to the latency of the first test path, the latency of the second test path, and the quantity of preset flapping times; or determine a jitter of the to-be-tested link according to the jitter of the first test path, the jitter of the second test path, and the quantity of preset flapping times.

Optionally, the processor 1101 is further configured to:

determine a packet loss rate of the first test path according to a quantity of first test packets in the sent first group of test packets and a quantity of first test packets in the received first group of test packets;
determine a packet loss rate of the second test path according to a quantity of second test packets in the sent second group of test packets and a quantity of second test packets in the received second group of test packets; and determine a packet loss rate of the to-be-tested link according to the packet loss rate of the first test path, the packet loss rate of the second test path, and the quantity of preset flapping times.

Optionally, the processor 1101 is further configured to:

determine a quantity of out-of-order test packets in the first group of test packets according to a first preset packet identifier and a packet identity ID of a test packet that is carried in each first test packet in the received first group of test packets, and determine an out-of-order rate of the first test path according to a quotient obtained by dividing the quantity of out-of-order test packets by the quantity of first test packets that are sent on the first test path; determine a quantity of out-of-order test packets in the second group of test packets according to a second preset packet identifier and a packet ID of a test packet that is carried in each second test packet in the received second group of test packets, and determine an out-of-order rate of the second test path according to a quotient obtained by dividing the quantity of out-of-order test packets by the quantity of second test packets that are sent on the second test path; and determine an out-of-order rate of the to-be-tested link according to the out-of-order rate of the first test path, the out-of-order rate of the second test path, and the quantity of preset flapping times.

Optionally, the processor 1101 is further configured to:

allocate a receiving timestamp to each first test packet according to disorder of the first group of test packets; and determine the latency or the jitter of the first test path according to the receiving timestamp and a sending timestamp of each first test packet.

Optionally, the processor 1101 is further configured to:

when receiving an $i^{th}$ first test packet in the first group of test packets, determine whether i is equal to j, where i is a packet identifier of a currently received first test packet, and j is a packet identifier of a to-be-processed packet; if i is equal to j, determine whether a cache sequence stores a $j+1^{th}$ first test packet, where the cache sequence is used to store an out-of-order first test packet, and a packet identifier of the out-of-order first test packet is greater than j; and if the cache sequence stores the $j+1^{th}$ first test packet, modify an initial receiving timestamp of the $j+1^{th}$ first test packet to a receiving timestamp of the $i^{th}$ first test packet, and add 1 to j; and perform a step of determining whether the cache sequence stores a $j+1^{th}$ first test packet until the cache sequence does not store the $j+1^{th}$ first test packet; and a next reached first test packet in the first group of test packets continues to be received.

Optionally, the processor 1101 is further configured to:

if i is not equal to j, determine whether the cache sequence is filled up; if the cache sequence is not filled up, store the $i^{th}$ first test packet to the cache sequence, and a next reached first test packet in the first group of test packets continues to be received; or if the cache sequence is filled up, determine whether the cache sequence stores a $j^{th}$ first test packet; and if the cache sequence does not store the $j^{th}$ first test packet, determine that the $j^{th}$ first test packet has been lost; determine a latency of the $j^{th}$ first test packet according to an average latency of first test packets whose packet identifiers are less than j in the first group of test packets; and perform the step of determining whether the cache sequence stores a $j+1^{th}$ first test packet.

Optionally, after modifying the initial receiving timestamp of the $j+1^{th}$ first test packet to the receiving timestamp of the $i^{th}$ first test packet, the processor 1101 is further configured to delete the $j+1^{th}$ first test packet from the cache sequence.

The network performance check apparatus in this embodiment may be configured to execute the technical solutions in any embodiment of the network performance check method embodiments 1 to 6 of this application. An implementation principle and a technical effect of the network performance check apparatus are similar to those of the network performance check method embodiments, and details are not described herein again.

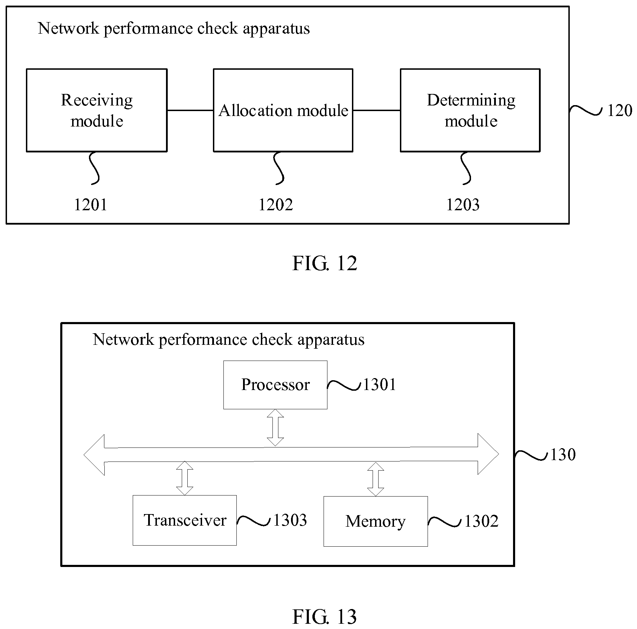

FIG. 12 is a schematic structural diagram of a third network performance check apparatus embodiment according to this application. As shown in FIG. 12, a network performance check apparatus 120 provided in this embodiment includes:

a receiving module 1201, configured to receive a group of test packets returned on a test path;

an allocation module 1202, configured to allocate a receiving timestamp to each test packet in a group of test packets according to disorder of the group of test packets; and

a determining module 1203, configured to determine a latency or a jitter of the test path according to the receiving timestamp and a sending timestamp of each test packet.

Optionally, the allocation module 1202 is specifically configured to:

when the receiving module receives an $i^{th}$ test packet in the group of test packets, determine whether i is equal to j, where i is a packet identifier of a currently received test packet, and j is a packet identifier of a to-be-processed packet; if i is equal to j, determine whether a cache sequence stores a $j+1^{th}$ test packet, where the cache sequence is used to store an out-of-order test packet, and a packet identifier of the out-of-order test packet is greater than j; and if the cache sequence stores the $j+1^{th}$ test packet, modify an initial receiving timestamp of the $j+1^{th}$ test packet to a receiving timestamp of the $i^{th}$ test packet, and add 1 to j; and perform a step of determining whether the cache sequence stores a $j+1^{th}$ test packet until the cache sequence does not store the $j+1^{th}$ test packet; and the receiving module continues to receive a next reached test packet in the group of test packets.

Optionally, the allocation module 1202 is further configured to:

if i is not equal to j, determine whether the cache sequence is filled up;
if the cache sequence is not filled up, store the $i^{th}$ test packet to the cache sequence, and the receiving module continues to receive a next reached test packet in the group of test packets; or
if the cache sequence is filled up, determine whether the cache sequence stores a $j^{th}$ test packet; and
if the cache sequence does not store the $j^{th}$ test packet, determine that the $j^{th}$ test packet has been lost; determine a latency of the $j^{th}$ test packet according to an average latency of test packets whose packet identifiers are less than j in the group of test packets; and perform the step of determining whether the cache sequence stores a $j+1^{th}$ test packet.

Optionally, after modifying the initial receiving timestamp of the $j+1^{th}$ test packet to the receiving timestamp of the $i^{th}$ test packet, the allocation module 1202 is further configured to:
delete the $j+1^{th}$ test packet from the cache sequence.

The network performance check apparatus in this embodiment may be configured to execute the technical solutions in the network performance check method embodiments 1 to 6 of this application. An implementation principle and a technical effect of the network performance check apparatus are similar to those of the network performance check method embodiments, and details are not described herein again.

FIG. 13 is a schematic structural diagram of a fourth network performance check apparatus embodiment according to this application. As shown in FIG. 13, a network performance check apparatus 130 provided in this embodiment may include a processor 1301, a memory 1302, and a transceiver 1303. The memory 1302 and the transceiver 1303 are both connected to the processor 1301.

The transceiver 1303 is configured to receive a group of test packets returned on a test path. The memory 1302 is configured to store an executable instruction. The processor 1301 is configured to: execute the executable instruction in the memory 1302, and perform the following operations: allocating a receiving timestamp to each test packet in a group of test packets according to disorder of the group of test packets; and determining a latency or a jitter of the test path according to the receiving timestamp, and a sending timestamp of each test packet.

Optionally, the processor 1301 is further configured to:

when receiving an $i^{th}$ test packet in the group of test packets, determine whether i is equal to j, where i is a packet identifier of a currently received test packet, and j is a packet identifier of a to-be-processed packet; if i is equal to j, determine whether a cache sequence stores a $j+1^{th}$ test packet, where the cache sequence is used to store an out-of-order test packet, and a packet identifier of the out-of-order test packet is greater than j; and if the cache sequence stores the $j+1^{th}$ test packet, modify an initial receiving timestamp of the $j+1^{th}$ test packet to a receiving timestamp of the $i^{th}$ test packet, and add 1 to j; and perform a step of determining whether the cache sequence stores a $j+1^{th}$ test packet until the cache sequence does not store the $j+1^{th}$ test packet; and a next reached test packet in the group of test packets continues to be received.

Optionally, the processor 1301 is further configured to:

if i is not equal to j, determine whether the cache sequence is filled up;

if the cache sequence is not filled up, store the $i^{th}$ test packet to the cache sequence, and a next reached test packet in the group of test packets continues to be received; or

if the cache sequence is filled up, determine whether the cache sequence stores a $j^{th}$ test packet; and

if the cache sequence does not store the $j^{th}$ test packet, determine that the $j^{th}$ test packet has been lost; determine a latency of the $j^{th}$ test packet according to an average latency of test packets whose packet identifiers are less than j in the group of test packets; and perform the step of determining whether the cache sequence stores a $j+1^{th}$ test packet.

Optionally, after modifying the initial receiving timestamp of the $j+1^{th}$ test packet to the receiving timestamp of the $i^{th}$ test packet, the processor 1301 is further configured to delete the $j+1^{th}$ test packet from the cache sequence.

The network performance check apparatus in this embodiment may be configured to execute the technical solutions in the network performance check method embodiment 6 of this application. An implementation principle and a technical effect of the network performance check apparatus are similar to those of the network performance check method embodiment, and details are not described herein again.

In the several embodiments provided in this application, it should be understood that the disclosed apparatus and method may be implemented in another manner. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of this application may be integrated into one processing unit, or each of the units may exist alone physically, or at least two units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, a network device, or the like) or a processor (processor) to perform a part of the steps of the methods described in the embodiments of this application.

It may be clearly understood by a person skilled in the art that, for the purpose of convenient and brief description, division of the foregoing functional modules is used as an example for illustration. In actual application, the foregoing functions can be allocated to different functional modules and implemented according to a requirement, that is, an inner structure of an apparatus is divided into different functional modules to implement all or part of the functions described above. For detailed working processes of the foregoing apparatuses, reference may be made to corresponding processes in the foregoing method embodiments, and details are not described herein again.

A person of ordinary skill may understand that various numbers such as "first" and "second" in this specification are only used for differentiation for ease of description, but are not used to limit the scope of the embodiments of this application.

A person of ordinary skill in the art may understand that sequence numbers of the foregoing processes do not mean execution sequences in various embodiments of this application. The execution sequences of the processes should be determined according to functions and internal logic of the processes, and should not be construed as any limitation on the implementation processes of the embodiments of this application.

A person of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

**Claims**

1.  A network performance check method, comprising:

    • sending a first group of test packets and a second group of test packets, wherein the first group of test packets is used to test a first test path, the second group of test packets is used to test a second test path, and the first test path comprises the second test path and a to-be-tested link (S201);
• receiving a first group of test packets returned on the first test path and a second group of test packets returned on the second test path, wherein the first group of test packets flaps on the to-be-tested link according to a quantity of preset flapping times (S202); and
• determining network performance of the to-be-tested link according to a received first group of test packets and a received second group of test packets (S 203).

2. The method according to claim 1, wherein before the sending a first group of test packets and a second group of test packets, the method further comprises:

generating the first group of test packets according to the quantity of preset flapping times, wherein each first test packet in the first group of test packets carries at least one first link tag group and at least one second link tag group that are corresponding to the to-be-tested link, wherein each first link tag group comprises M same first link tags, each second link tag group comprises M same second link tags, a value of M is equal to the quantity of preset flapping times, the first link tag is used to indicate a next hop target node of the first test packet in a forward transmission direction, and the second link tag is used to indicate a next hop target node of the first test packet in a reverse transmission direction.

3. The method according to claim 1 or 2, wherein the determining network performance of the to-be-tested link according to a received first group of test packets and a received second group of test packets comprises:

determining a latency or a jitter of the first test path according to time information carried in each first test packet in the received first group of test packets;
determining a latency or a jitter of the second test path according to time information carried in each second test packet in the received second group of test packets; and
determining a latency of the to-be-tested link according to the latency of the first test path, the latency of the second test path, and the quantity of preset flapping times; or
determining a jitter of the to-be-tested link according to the jitter of the first test path, the jitter of the second test path, and the quantity of preset flapping times.

4. The method according to claim 1 or 2, wherein the determining network performance of the to-be-tested link according to a received first group of test packets and a received second group of test packets comprises:

determining a packet loss rate of the first test path according to a quantity of first test packets in the sent first group of test packets and a quantity of first test packets in the received first group of test packets;
determining a packet loss rate of the second test path according to a quantity of second test packets in the sent second group of test packets and a quantity of second test packets in the received second group of test packets; and
determining a packet loss rate of the to-be-tested link according to the packet loss rate of the first test path, the packet loss rate of the second test path, and the quantity of preset flapping times.

5. The method according to claim 1 or 2, wherein the determining network performance of the to-be-tested link according to a received first group of test packets and a received second group of test packets comprises:

determining a quantity of out-of-order test packets in the first group of test packets according to a first preset packet identifier and a packet identity, ID, of a test packet that is carried in each first test packet in the received first group of test packets, and determining an out-of-order rate of the first test path according to a quotient obtained by dividing the quantity of out-of-order test packets by the quantity of first test packets that are sent on the first test path;
determining a quantity of out-of-order test packets in the second group of test packets according to a second preset packet identifier and a packet ID of a test packet that is carried in each second test packet in the received second group of test packets, and determining an out-of-order rate of the second test path according to a quotient obtained by dividing the quantity of out-of-order test packets by the quantity of second test packets that are sent on the second test path; and
determining an out-of-order rate of the to-be-tested link according to the out-of-order rate of the first test path, the out-of-order rate of the second test path, and the quantity of preset flapping times.

6. The method according to claim 3, wherein the determining a latency or a jitter of the first test path according to time information carried in each first test packet in the received first group of test packets comprises:

allocating a receiving timestamp to each first test packet according to disorder of the first group of test packets; and determining the latency or the jitter of the first test path according to the receiving timestamp and a sending timestamp of each first test packet.

7. The method according to claim 6, wherein the allocating a receiving timestamp to each first test packet according to disorder of the first group of test packets comprises:

when receiving an $i^{th}$ first test packet in the first group of test packets, determining whether i is equal to j, wherein i is a packet identifier of a currently received first test packet, and j is a packet identifier of a to-be-processed test packet;
if i is equal to j, determining whether a cache sequence stores a $j+1^{th}$ first test packet, wherein the cache sequence is used to store an out-of-order first test packet, and a packet identifier of the out-of-order first test packet is greater than j; and
if the cache sequence stores the $j+1^{th}$ first test packet, modifying an initial receiving timestamp of the $j+1^{th}$ first test packet to a receiving timestamp of the $i^{th}$ first test packet, and adding 1 to j; performing a step of determining whether the cache sequence stores a $j+1^{th}$ first test packet until the cache sequence does not store the $j+1^{th}$ first test packet; and continuing to receive a next reached first test packet in the first group of test packets.

8. A network performance check apparatus, comprising:

• a sending module (1001), configured to send a first group of test packets and a second group of test packets, wherein the first group of test packets is used to test a first test path, the second group of test packets is used to test a second test path, and the first test path comprises the second test path and a to-be-tested link;
• a receiving module (1002), configured to receive a first group of test packets returned on the first test path and a second group of test packets returned on the second test path, wherein the first group of test packets flaps on the to-be-tested link according to a quantity of preset flapping times; and
• a determining module (1003), configured to determine network performance of the to-be-tested link according to a received first group of test packets and a received second group of test packets.

9. The apparatus according to claim 8, wherein the apparatus further comprises:

a generation module, configured to generate the first group of test packets according to the quantity of preset flapping times, wherein
each first test packet in the first group of test packets carries at least one first link tag group and at least one second link tag group that are corresponding to the to-be-tested link, wherein each first link tag group comprises M same first link tags, each second link tag group comprises M same second link tags, a value of M is equal to the quantity of preset flapping times, the first link tag is used to indicate a next hop target node of the first test packet in a forward transmission direction, and the second link tag is used to indicate a next hop target node of the first test packet in a reverse transmission direction.

10. The apparatus according to claim 8 or 9, wherein the determining module comprises:

a first determining submodule, configured to determine a latency or a jitter of the first test path according to time information carried in each first test packet in the received first group of test packets;
a second determining submodule, configured to determine a latency or a jitter of the second test path according to time information carried in each second test packet in the received second group of test packets; and
a third determining submodule, configured to: determine a latency of the to-be-tested link according to the latency of the first test path, the latency of the second test path, and the quantity of preset flapping times; or determine a jitter of the to-be-tested link according to the jitter of the first test path, the jitter of the second test path, and the quantity of preset flapping times.

11. The apparatus according to claim 8 or 9, wherein the determining module comprises:

a fourth determining submodule, configured to determine a packet loss rate of the first test path according to a quantity of first test packets in the sent first group of test packets and a quantity of first test packets in the received first group of test packets;

a fifth determining submodule, configured to determine a packet loss rate of the second test path according to a quantity of second test packets in the sent second group of test packets and a quantity of second test packets in the received second group of test packets; and

a sixth determining submodule, configured to determine a packet loss rate of the to-be-tested link according to the packet loss rate of the first test path, the packet loss rate of the second test path, and the quantity of preset flapping times.

**12.** The apparatus according to claim 8 or 9, wherein the determining module comprises:

a seventh determining submodule, configured to: determine a quantity of out-of-order test packets in the first group of test packets according to a first preset packet identifier and a packet identity, ID, of a test packet that is carried in each first test packet in the received first group of test packets, and determine an out-of-order rate of the first test path according to a quotient obtained by dividing the quantity of out-of-order test packets by the quantity of first test packets that are sent on the first test path;

an eighth determining submodule, configured to: determine a quantity of out-of-order test packets in the second group of test packets according to a second preset packet identifier and a packet ID of a test packet that is carried in each second test packet in the received second group of test packets, and determine an out-of-order rate of the second test path according to a quotient obtained by dividing the quantity of out-of-order test packets by the quantity of second test packets that are sent on the second test path; and

a ninth determining submodule, configured to determine an out-of-order rate of the to-be-tested link according to the out-of-order rate of the first test path, the out-of-order rate of the second test path, and the quantity of preset flapping times.

**13.** The apparatus according to claim 10, wherein the first determining submodule comprises:

an allocation unit, configured to allocate a receiving timestamp to each first test packet according to disorder of the first group of test packets; and

a determining unit, configured to determine the latency or the jitter of the first test path according to the receiving timestamp and a sending timestamp of each first test packet.

**14.** The apparatus according to claim 13, wherein the allocation unit is specifically configured to:

when the receiving module receives an $i^{th}$ first test packet in the first group of test packets, determine whether i is equal to j, wherein i is a packet identifier of a currently received first test packet, and j is a packet identifier of a to-be-processed test packet;

if i is equal to j, determine whether a cache sequence stores a $j+1^{th}$ first test packet, wherein the cache sequence is used to store an out-of-order first test packet, and a packet identifier of the out-of-order first test packet is greater than j; and

if the cache sequence stores the $j+1^{th}$ first test packet, modify an initial receiving timestamp of the $j+1^{th}$ first test packet to a receiving timestamp of the $i^{th}$ first test packet, and add 1 to j; and perform a step of determining whether the cache sequence stores a $j+1^{th}$ first test packet until the cache sequence does not store the $j+1^{th}$ first test packet; and the receiving module continues to receive a next reached first test packet in the first group of test packets.

**Patentansprüche**

1. Netzleistungs-Prüfverfahren, das Folgendes umfasst:

• Senden einer ersten Gruppe von Testpaketen und einer zweiten Gruppe von Testpaketen, wobei die erste Gruppe von Testpaketen verwendet wird, um einen ersten Testweg zu testen, die zweite Gruppe von Testpaketen verwendet wird, um einen zweiten Testweg zu testen, und der erste Testweg den zweiten Testweg und eine zu testende Verbindung umfasst (S201);

• Empfangen einer ersten Gruppe von Testpaketen, die auf dem ersten Testweg zurückgeschickt werden, und einer zweiten Gruppe von Testpaketen, die auf dem zweiten Testweg zurückgeschickt werden, wobei die erste Gruppe von Testpaketen gemäß einer Anzahl von vorgegebenen Flatterzeitpunkten auf der zu testenden Verbindung flattert (S202); und

• Bestimmen der Netzleistung der zu testenden Verbindung gemäß einer empfangenen ersten Gruppe von Testpaketen und einer empfangenen zweiten Gruppe von Testpaketen (S203).

2. Verfahren nach Anspruch 1, wobei vor dem Senden einer ersten Gruppe von Testpaketen und einer zweiten Gruppe von Testpaketen das Verfahren ferner Folgendes umfasst:

Erzeugen der ersten Gruppe von Testpaketen gemäß der Anzahl von vorgegebenen Flatterzeitpunkten, wobei jedes erste Testpaket in der ersten Gruppe von Testpaketen wenigstens eine erste Verbindungsetikettgruppe und wenigstens eine zweite Verbindungsetikettgruppe, die der zu testenden Verbindung entsprechen, führt, wobei jede erste Verbindungsetikettgruppe M gleiche erste Verbindungsetiketten umfasst, jede zweite Verbindungsetikettgruppe M gleiche zweite Verbindungsetiketten umfasst, ein Wert von M gleich der Anzahl von vorgegebenen Flatterzeitpunkten ist, das erste Verbindungsetikett verwendet wird, um einen nächsten Sprungzielknoten des ersten Testpakets in einer Vorwärtsübertragungsrichtung anzugeben, und das zweite Verbindungsetikett verwendet wird, um einen nächsten Sprungzielknoten des ersten Testpakets in einer Rückwärtsübertragungsrichtung anzugeben.

3. Verfahren nach Anspruch 1 oder 2, wobei das Bestimmen der Netzleistung der zu testenden Verbindung gemäß einer empfangenen ersten Gruppe von Testpaketen und einer empfangenen zweiten Gruppe von Testpaketen Folgendes umfasst:

Bestimmen einer Latenzzeit oder eines Jitters des ersten Testwegs gemäß den Zeitinformationen, die in jedem ersten Testpaket in der empfangenen ersten Gruppe von Testpaketen geführt werden;
Bestimmen einer Latenzzeit oder eines Jitters des zweiten Testwegs gemäß den Zeitinformationen, die in jedem zweiten Testpaket in der empfangenen zweiten Gruppe von Testpaketen geführt werden; und
Bestimmen einer Latenzzeit der zu testenden Verbindung gemäß der Latenzzeit des ersten Testwegs, der Latenzzeit des zweiten Testwegs und der Anzahl von vorgegebenen Flatterzeitpunkten; oder
Bestimmen eines Jitters der zu testenden Verbindung gemäß dem Jitter des ersten Testwegs, dem Jitter des zweiten Testwegs und der Anzahl von vorgegebenen Flatterzeitpunkten.

4. Verfahren nach Anspruch 1 oder 2, wobei das Bestimmen der Netzleistung der zu testenden Verbindung gemäß einer empfangenen ersten Gruppe von Testpaketen und einer empfangenen zweiten Gruppe von Testpaketen Folgendes umfasst:

Bestimmen einer Paketverlustrate des ersten Testwegs gemäß einer Menge von ersten Testpaketen in der gesendeten ersten Gruppe von Testpaketen und einer Menge von ersten Testpaketen in der empfangenen ersten Gruppe von Testpaketen;
Bestimmen einer Paketverlustrate des zweiten Testwegs gemäß einer Menge von zweiten Testpaketen in der gesendeten zweiten Gruppe von Testpaketen und einer Menge von zweiten Testpaketen der empfangenen zweiten Gruppe von Testpaketen; und
Bestimmen einer Paketverlustrate der zu testenden Verbindung gemäß der Paketverlustrate des ersten Testwegs, der Paketverlustrate des zweiten Testwegs und der Anzahl von vorgegebenen Flatterzeitpunkten.

5. Verfahren nach Anspruch 1 oder 2, wobei das Bestimmen der Netzleistung der zu testenden Verbindung gemäß einer empfangenen ersten Gruppe von Testpaketen und einer empfangenen zweiten Gruppe von Testpaketen Folgendes umfasst:

Bestimmen einer Menge von Testpaketen außerhalb der Reihenfolge in der ersten Gruppe von Testpaketen gemäß einer ersten vorgegebenen Paketkennung und einer Paketidentität, ID, eines Testpakets, die in jedem ersten Testpaket in der empfangenen ersten Gruppe von Testpaketen geführt wird, und Bestimmen einer Rate außerhalb der Reihenfolge des ersten Testwegs gemäß einem Quotienten, der durch das Dividieren der Anzahl von Testpaketen außerhalb der Reihenfolge durch die Anzahl von ersten Testpaketen, die auf dem ersten Testweg gesendet werden, erhalten wird;
Bestimmen einer Menge von Testpaketen außerhalb der Reihenfolge in der zweiten Gruppe von Testpaketen gemäß einer zweiten vorgegebenen Paketkennung und einer Paket-ID eines Testpakets, die in jedem zweiten Testpaket in der empfangenen zweiten Gruppe von Testpaketen geführt wird, und Bestimmen einer Rate außerhalb der Reihenfolge des zweiten Testwegs gemäß einem Quotienten, der durch das Dividieren der Anzahl von Testpaketen außerhalb der Reihenfolge durch die Anzahl von zweiten Testpaketen, die auf dem zweiten Testweg gesendet werden, erhalten wird; und

Bestimmen einer Rate außerhalb der Reihenfolge der zu testenden Verbindung gemäß der Rate außerhalb der Reihenfolge des ersten Testwegs, der Rate außerhalb der Reihenfolge des zweiten Testwegs und der Anzahl von vorgegebenen Flatterzeitpunkten.

6. Verfahren nach Anspruch 3, wobei das Bestimmen einer Latenzzeit oder eines Jitters des ersten Testwegs gemäß den Zeitinformationen, die in jedem ersten Testpaket in der empfangenen ersten Gruppe von Testpaketen geführt werden, Folgendes umfasst:

Zuweisen eines Empfangszeitstempels zu jedem ersten Testpaket gemäß einer Unordnung der ersten Gruppe von Testpaketen und
Bestimmen der Latenzzeit oder des Jitters des ersten Testwegs gemäß dem Empfangszeitstempel und einem Sendezeitstempel jedes ersten Testpakets.

7. Verfahren nach Anspruch 6, wobei das Zuweisen eines Empfangszeitstempels zu jedem ersten Testpaket gemäß der Unordnung der ersten Gruppe von Testpaketen Folgendes umfasst:

wenn ein i-tes erstes Testpaket in der ersten Gruppe von Testpaketen empfangen wird, Bestimmen, ob i gleich j ist, wobei i eine Paketkennung eines aktuell empfangenen ersten Testpakets ist und j eine Paketkennung eines zu verarbeitenden Testpakets ist;
falls i gleich j ist, Bestimmen, ob eine Cache-Folge ein j + 1-tes erstes Testpaket speichert, wobei die Cache-Folge verwendet wird, um ein erstes Testpaket außerhalb der Reihenfolge zu speichern, und eine Paketkennung des ersten Testpakets außerhalb der Reihenfolge größer als j ist; und
falls die Cache-Folge das j + 1-te erste Testpaket speichert, Modifizieren eines anfänglichen Empfangszeitstempels des j + 1-ten ersten Testpakets zu einem Empfangszeitstempel des i-ten ersten Testpakets und Addieren von 1 zu j; Ausführen eines Schritts des Bestimmens, ob die Cache-Folge ein j + 1-tes erstes Testpaket speichert, bis die Cache-Folge das j + 1-te erste Testpaket nicht speichert; und
Fortsetzen des Empfangens eines nächsten erreichten ersten Testpakets in der ersten Gruppe von Testpaketen.

8. Netzleistungs-Prüfvorrichtung, die Folgendes umfasst:

• ein Sendemodul (1001), das konfiguriert ist, eine erste Gruppe von Testpaketen und eine zweite Gruppe von Testpaketen zu senden, wobei die erste Gruppe von Testpaketen verwendet wird, um einen ersten Testweg zu testen, die zweite Gruppe von Testpaketen verwendet wird, um einen zweiten Testweg zu testen, und der erste Testweg den zweiten Testweg und eine zu testende Verbindung umfasst;
• ein Empfangsmodul (1002), das konfiguriert ist, eine erste Gruppe von Testpaketen, die auf dem ersten Testweg zurückgeschickt werden, und eine zweite Gruppe von Testpaketen, die auf dem zweiten Testweg zurückgeschickt werden, zu empfangen, wobei die erste Gruppe von Testpaketen gemäß einer Anzahl von vorgegebenen Flatterzeitpunkten auf der zu testenden Verbindung flattert; und
• ein Bestimmungsmodul (1003), das konfiguriert ist, die Netzleistung der zu testenden Verbindung gemäß einer empfangenen ersten Gruppe von Testpaketen und einer empfangenen zweiten Gruppe von Testpaketen zu bestimmen.

9. Vorrichtung nach Anspruch 8, wobei die Vorrichtung ferner Folgendes umfasst:

ein Erzeugungsmodul, das konfiguriert ist, die erste Gruppe von Testpaketen gemäß der Anzahl von vorgegebenen Flatterzeitpunkten zu erzeugen, wobei
jedes erste Testpaket in der ersten Gruppe von Testpaketen wenigstens eine erste Verbindungsetikettgruppe und wenigstens eine zweite Verbindungsetikettgruppe, die der zu testenden Verbindung entsprechen, führt, wobei jede erste Verbindungsetikettgruppe M gleiche erste Verbindungsetiketten umfasst, jede zweite Verbindungsetikettgruppe M gleiche zweite Verbindungsetiketten umfasst, ein Wert von M gleich der Anzahl von vorgegebenen Flatterzeitpunkten ist, das erste Verbindungsetikett verwendet wird, um einen nächsten Sprungzielknoten des ersten Testpakets in einer Vorwärtsübertragungsrichtung anzugeben, und das zweite Verbindungsetikett verwendet wird, um einen nächsten Sprungzielknoten des ersten Testpakets in einer Rückwärtsübertragungsrichtung anzugeben.

10. Vorrichtung nach Anspruch 8 oder 9, wobei das Bestimmungsmodul Folgendes umfasst:

ein erstes Bestimmungsuntermodul, das konfiguriert ist, eine Latenzzeit oder einen Jitter des ersten Testwegs gemäß den Zeitinformationen, die in jedem ersten Testpaket in der empfangenen ersten Gruppe von Testpaketen geführt werden, zu bestimmen;
ein zweites Bestimmungsuntermodul, das konfiguriert ist, eine Latenzzeit oder einen Jitter des zweiten Testwegs gemäß den Zeitinformationen, die in jedem zweiten Testpaket in der empfangenen zweiten Gruppe von Testpaketen geführt werden, zu bestimmen; und
ein drittes Bestimmungsuntermodul, das konfiguriert ist: eine Latenzzeit der zu testenden Verbindung gemäß der Latenzzeit des ersten Testwegs, der Latenzzeit des zweiten Testwegs und der Anzahl von vorgegebenen Flatterzeitpunkten zu bestimmen;
oder einen Jitter der zu testenden Verbindung gemäß dem Jitter des ersten Testwegs, dem Jitter des zweiten Testwegs und der Anzahl von vorgegebenen Flatterzeitpunkten zu bestimmen.

11. Vorrichtung nach Anspruch 8 oder 9, wobei das Bestimmungsmodul Folgendes umfasst:

ein viertes Bestimmungsuntermodul, das konfiguriert ist, eine Paketverlustrate des ersten Testwegs gemäß einer Menge von ersten Testpaketen in der gesendeten ersten Gruppe von Testpaketen und einer Menge von ersten Testpaketen in der empfangenen ersten Gruppe von Testpaketen zu bestimmen;
ein fünftes Bestimmungsuntermodul, das konfiguriert ist, eine Paketverlustrate des zweiten Testwegs gemäß einer Menge von zweiten Testpaketen in der gesendeten zweiten Gruppe von Testpaketen und einer Menge von zweiten Testpaketen in der empfangenen zweiten Gruppe von Testpaketen zu bestimmen; und
ein sechstes Bestimmungsuntermodul, das konfiguriert ist, eine Paketverlustrate der zu testenden Verbindung gemäß der Paketverlustrate des ersten Testwegs, der Paketverlustrate des zweiten Testwegs und der Anzahl von vorgegebenen Flatterzeitpunkten zu bestimmen.

12. Vorrichtung nach Anspruch 8 oder 9, wobei das Bestimmungsmodul Folgendes umfasst:

ein siebtes Bestimmungsuntermodul, das konfiguriert ist: eine Menge von Testpaketen außerhalb der Reihenfolge in der ersten Gruppe von Testpaketen gemäß einer ersten vorgegebenen Paketkennung und einer Paketidentität, ID, eines Testpakets, die in jedem ersten Testpaket in der empfangenen ersten Gruppe von Testpaketen geführt wird, zu bestimmen und eine Rate außerhalb der Reihenfolge des ersten Testwegs gemäß einem Quotienten, der durch das Dividieren der Anzahl von Testpaketen außerhalb der Reihenfolge durch die Anzahl von ersten Testpaketen, die auf dem ersten Testweg gesendet werden, erhalten wird, zu bestimmen;
ein achtes Bestimmungsuntermodul, das konfiguriert ist: eine Menge von Testpaketen außerhalb der Reihenfolge in der zweiten Gruppe von Testpaketen gemäß einer zweiten vorgegebenen Paketkennung und einer Paket-ID eines Testpakets, die in jedem zweiten Testpaket in der empfangenen zweiten Gruppe von Testpaketen geführt wird, zu bestimmen und eine Rate außerhalb der Reihenfolge des zweiten Testwegs gemäß einem Quotienten, der durch das Dividieren der Anzahl von Testpaketen außerhalb der Reihenfolge durch die Anzahl von zweiten Testpaketen, die auf dem zweiten Testweg gesendet werden, erhalten wird, zu bestimmen; und
ein neuntes Bestimmungsuntermodul, das konfiguriert ist, eine Rate außerhalb der Reihenfolge der zu testenden Verbindung gemäß der Rate außerhalb der Reihenfolge des ersten Testwegs, der Rate außerhalb der Reihenfolge des zweiten Testwegs und der Anzahl von vorgegebenen Flatterzeitpunkten zu bestimmen.

13. Vorrichtung nach Anspruch 10, wobei das erste Bestimmungsuntermodul Folgendes umfasst:

eine Zuweisungseinheit, die konfiguriert ist, jedem ersten Testpaket gemäß einer Unordnung der ersten Gruppe von Testpaketen einen Empfangszeitstempel zuzuweisen; und
eine Bestimmungseinheit, die konfiguriert ist, die Latenzzeit oder den Jitter des ersten Testwegs gemäß dem Empfangszeitstempel und einem Sendezeitstempel jedes ersten Testpakets zu bestimmen.

14. Vorrichtung nach Anspruch 13, wobei die Zuweisungseinheit spezifisch konfiguriert ist:

wenn das Empfangsmodul ein i-tes erstes Testpaket in der ersten Gruppe von Testpaketen empfängt, zu bestimmen, ob i gleich j ist, wobei i eine Paketkennung eines aktuell empfangenen ersten Testpakets ist und j eine Paketkennung eines zu verarbeitenden Testpakets ist;
falls i gleich j ist, zu bestimmen, ob eine Cache-Folge ein j + 1-tes erstes Testpaket speichert, wobei die Cache-Folge verwendet wird, um ein erstes Testpaket außerhalb der Reihenfolge zu speichern, und eine Paketkennung des ersten Testpakets außerhalb der Reihenfolge größer als j ist; und
falls die Cache-Folge das j + 1-te erste Testpaket speichert, einen anfänglichen Empfangszeitstempel des j + 1-ten ersten Testpakets zu einem Empfangszeitstempel des i-ten ersten Testpakets zu modifizieren und 1 zu j zu addieren; und einen Schritt des Bestimmens, ob die Cache-Folge ein j + 1-tes erstes Testpaket speichert, bis die Cache-Folge das j + 1-te erste Testpaket nicht speichert, auszuführen; und das Empfangsmodul weiterhin ein nächstes erreichtes erstes Testpaket in der ersten Gruppe von Testpaketen empfängt.

**Revendications**

1. Procédé de contrôle de performance réseau, comprenant :

   • l'envoi d'un premier groupe de paquets de test et d'un deuxième groupe de paquets de test, le premier groupe de paquets de test servant à tester un premier chemin de test, le deuxième groupe de paquets de test servant à tester un deuxième chemin de test et le premier chemin de test comprenant le deuxième chemin de test et une liaison à tester (S 201) ;
   • la réception d'un premier groupe de paquets de test renvoyé sur le premier chemin de test et d'un deuxième groupe de paquets de test renvoyé sur le deuxième chemin de test, le premier groupe de paquets de test allant et venant sur la liaison à tester selon une quantité d'occurrences de va-et-vient prédéfinies (S 202) ; et
   • la détermination d'une performance réseau de la liaison à tester selon un premier groupe reçu de paquets de test et un deuxième groupe reçu de paquets de test (S 203).

2. Procédé selon la revendication 1, lequel procédé comprend en outre, préalablement à l'envoi d'un premier groupe de paquets de test et d'un deuxième groupe de paquets de test :

   la génération du premier groupe de paquets de test selon la quantité d'occurrences de va-et-vient prédéfinies, chaque premier paquet de test dans le premier groupe de paquets de test véhiculant au moins un premier groupe d'étiquettes de liaison et au moins un deuxième groupe d'étiquettes de liaison qui correspondent à la liaison à tester, chaque premier groupe d'étiquettes de liaison comprenant M mêmes premières étiquettes de liaison, chaque deuxième groupe d'étiquettes de liaison comprenant M mêmes deuxièmes étiquettes de liaison, une valeur de M étant égale à la quantité d'occurrences de va-et-vient prédéfinies, la première étiquette de liaison servant à indiquer un nœud cible de prochain saut du premier paquet de test dans une direction de transmission aller et la deuxième étiquette de liaison servant à indiquer un nœud cible de prochain saut du premier paquet de test dans une direction de transmission retour.

3. Procédé selon la revendication 1 ou 2, dans lequel la détermination d'une performance réseau de la liaison à tester selon un premier groupe reçu de paquets de test et un deuxième groupe reçu de paquets de test comprend :

   la détermination d'une latence ou d'une gigue du premier chemin de test selon des informations temporelles véhiculées dans chaque premier paquet de test dans le premier groupe reçu de paquets de test ;
   la détermination d'une latence ou d'une gigue du deuxième chemin de test selon des informations temporelles véhiculées dans chaque deuxième paquet de test dans le deuxième groupe reçu de paquets de test ; et
   la détermination d'une latence de la liaison à tester selon la latence du premier chemin de test, la latence du deuxième chemin de test et la quantité d'occurrences de va-et-vient prédéfinies ; ou
   la détermination d'une gigue de la liaison à tester selon la gigue du premier chemin de test, la gigue du deuxième chemin de test et la quantité d'occurrences de va-et-vient prédéfinies.

4. Procédé selon la revendication 1 ou 2, dans lequel la détermination d'une performance réseau de la liaison à tester selon un premier groupe reçu de paquets de test et un deuxième groupe reçu de paquets de test comprend :

   la détermination d'un taux de perte de paquets du premier chemin de test selon une quantité de premiers paquets de test dans le premier groupe envoyé de paquets de test et une quantité de premiers paquets de test dans le premier groupe reçu de paquets de test ;
   la détermination d'un taux de perte de paquets du deuxième chemin de test selon une quantité de deuxièmes paquets de test dans le deuxième groupe envoyé de paquets de test et une quantité de deuxièmes paquets de test dans le deuxième groupe reçu de paquets de test ; et
   la détermination d'un taux de perte de paquets de la liaison à tester selon le taux de perte de paquets du premier chemin de test, le taux de perte de paquets du deuxième chemin de test et la quantité d'occurrences de va-et-vient prédéfinies.

5. Procédé selon la revendication 1 ou 2, dans lequel la détermination d'une performance réseau de la liaison à tester selon un premier groupe reçu de paquets de test et un deuxième groupe reçu de paquets de test comprend :

la détermination d'une quantité de paquets de test désordonnés dans le premier groupe de paquets de test selon un premier identifiant de paquet prédéfini et une identité, ID, de paquet d'un paquet de test qui est véhiculée dans chaque premier paquet de test dans le premier groupe reçu de paquets de test, et la détermination d'un taux de désordre du premier chemin de test selon un quotient obtenu par division de la quantité de paquets de test désordonnés par la quantité de premiers paquets de test qui sont envoyés sur le premier chemin de test ;
la détermination d'une quantité de paquets de test désordonnés dans le deuxième groupe de paquets de test selon un deuxième identifiant de paquet prédéfini et une ID de paquet d'un paquet de test qui est véhiculée dans chaque deuxième paquet de test dans le deuxième groupe reçu de paquets de test, et la détermination d'un taux de désordre du deuxième chemin de test selon un quotient obtenu par division de la quantité de paquets de test désordonnés par la quantité de deuxièmes paquets de test qui sont envoyés sur le deuxième chemin de test ; et
la détermination d'un taux de désordre de la liaison à tester selon le taux de désordre du premier chemin de test, le taux de désordre du deuxième chemin de test et la quantité d'occurrences de va-et-vient prédéfinies.

6. Procédé selon la revendication 3, dans lequel la détermination d'une latence ou d'une gigue du premier chemin de test selon des informations temporelles véhiculées dans chaque premier paquet de test dans le premier groupe reçu de paquets de test comprend :

l'allocation d'un horodatage de réception à chaque premier paquet de test selon un désordre du premier groupe de paquets de test ; et
la détermination de la latence ou de la gigue du premier chemin de test selon l'horodatage de réception et un horodatage d'envoi de chaque premier paquet de test.

7. Procédé selon la revendication 6, dans lequel l'allocation d'un horodatage de réception à chaque premier paquet de test selon un désordre du premier groupe de paquets de test comprend :

lors de la réception d'un i-ème premier paquet de test dans le premier groupe de paquets de test, la détermination si i est égal ou non à j, i représentant un identifiant de paquet d'un premier paquet de test actuellement reçu et j représentant un identifiant de paquet d'un paquet de test à traiter ;
si i est égal à j, la détermination si une séquence de cache stocke ou non un j+1-ième premier paquet de test, la séquence de cache servant à stocker un premier paquet de test désordonné et un identifiant de paquet du premier paquet de test désordonné étant supérieur à j ; et
si la séquence de cache stocke le j+1-ième premier paquet de test, la modification d'un horodatage de réception initial du j+l-ième premier paquet de test en un horodatage de réception du i-ème premier paquet de test, et l'ajout de 1 à j ; la réalisation d'une étape de détermination si la séquence de cache stocke ou non un j+l-ième premier paquet de test jusqu'à ce que la séquence de cache ne stocke plus le j+1-ième premier paquet de test ; et la poursuite de la réception d'un premier paquet de test parvenu suivant dans le premier groupe de paquets de test.

8. Appareil de contrôle de performance réseau, comprenant :

• un module d'envoi (1001), configuré pour envoyer un premier groupe de paquets de test et un deuxième groupe de paquets de test, le premier groupe de paquets de test servant à tester un premier chemin de test, le deuxième groupe de paquets de test servant à tester un deuxième chemin de test et le premier chemin de test comprenant le deuxième chemin de test et une liaison à tester ;
• un module de réception (1002), configuré pour recevoir un premier groupe de paquets de test renvoyé sur le premier chemin de test et un deuxième groupe de paquets de test renvoyé sur le deuxième chemin de test, le premier groupe de paquets de test allant et venant sur la liaison à tester selon une quantité d'occurrences de va-et-vient prédéfinies ; et
• un module de détermination (1003), configuré pour déterminer une performance réseau de la liaison à tester selon un premier groupe reçu de paquets de test et un deuxième groupe reçu de paquets de test.

9. Appareil selon la revendication 8, lequel appareil comprend en outre :

un module de génération, configuré pour générer le premier groupe de paquets de test selon la quantité d'occurrences de va-et-vient prédéfinies,

chaque premier paquet de test dans le premier groupe de paquets de test véhiculant au moins un premier groupe d'étiquettes de liaison et au moins un deuxième groupe d'étiquettes de liaison qui correspondent à la liaison à tester, chaque premier groupe d'étiquettes de liaison comprenant M mêmes premières étiquettes de liaison, chaque deuxième groupe d'étiquettes de liaison comprenant M mêmes deuxièmes étiquettes de liaison, une valeur de M étant égale à la quantité d'occurrences de va-et-vient prédéfinies, la première étiquette de liaison servant à indiquer un nœud cible de prochain saut du premier paquet de test dans une direction de transmission aller et la deuxième étiquette de liaison servant à indiquer un nœud cible de prochain saut du premier paquet de test dans une direction de transmission retour.

10. Appareil selon la revendication 8 ou 9, dans lequel le module de détermination comprend :

un premier sous-module de détermination, configuré pour déterminer une latence ou une gigue du premier chemin de test selon des informations temporelles véhiculées dans chaque premier paquet de test dans le premier groupe reçu de paquets de test ;
un deuxième sous-module de détermination, configuré pour déterminer une latence ou une gigue du deuxième chemin de test selon des informations temporelles véhiculées dans chaque deuxième paquet de test dans le deuxième groupe reçu de paquets de test ; et
un troisième sous-module de détermination, configuré pour : déterminer une latence de la liaison à tester selon la latence du premier chemin de test, la latence du deuxième chemin de test et la quantité d'occurrences de va-et-vient prédéfinies ; ou déterminer une gigue de la liaison à tester selon la gigue du premier chemin de test, la gigue du deuxième chemin de test et la quantité d'occurrences de va-et-vient prédéfinies.

11. Appareil selon la revendication 8 ou 9, dans lequel le module de détermination comprend :

un quatrième sous-module de détermination, configuré pour déterminer un taux de perte de paquets du premier chemin de test selon une quantité de premiers paquets de test dans le premier groupe envoyé de paquets de test et une quantité de premiers paquets de test dans le premier groupe reçu de paquets de test ;
un cinquième sous-module de détermination, configuré pour déterminer un taux de perte de paquets du deuxième chemin de test selon une quantité de deuxièmes paquets de test dans le deuxième groupe envoyé de paquets de test et une quantité de deuxièmes paquets de test dans le deuxième groupe reçu de paquets de test ; et
un sixième sous-module de détermination, configuré pour déterminer un taux de perte de paquets de la liaison à tester selon le taux de perte de paquets du premier chemin de test, le taux de perte de paquets du deuxième chemin de test et la quantité d'occurrences de va-et-vient prédéfinies.

12. Appareil selon la revendication 8 ou 9, dans lequel le module de détermination comprend :

un septième sous-module de détermination, configuré pour : déterminer une quantité de paquets de test désordonnés dans le premier groupe de paquets de test selon un premier identifiant de paquet prédéfini et une identité, ID, de paquet d'un paquet de test qui est véhiculée dans chaque premier paquet de test dans le premier groupe reçu de paquets de test, et déterminer un taux de désordre du premier chemin de test selon un quotient obtenu en divisant la quantité de paquets de test désordonnés par la quantité de premiers paquets de test qui sont envoyés sur le premier chemin de test ;
un huitième sous-module de détermination, configuré pour : déterminer une quantité de paquets de test désordonnés dans le deuxième groupe de paquets de test selon un deuxième identifiant de paquet prédéfini et une ID de paquet d'un paquet de test qui est véhiculée dans chaque deuxième paquet de test dans le deuxième groupe reçu de paquets de test, et déterminer un taux de désordre du deuxième chemin de test selon un quotient obtenu en divisant la quantité de paquets de test désordonnés par la quantité de deuxièmes paquets de test qui sont envoyés sur le deuxième chemin de test ; et
un neuvième sous-module de détermination, configuré pour déterminer un taux de désordre de la liaison à tester selon le taux de désordre du premier chemin de test, le taux de désordre du deuxième chemin de test et la quantité d'occurrences de va-et-vient prédéfinies.

13. Appareil selon la revendication 10, dans lequel le premier sous-module de détermination comprend :

une unité d'allocation, configurée pour allouer un horodatage de réception à chaque premier paquet de test selon un désordre du premier groupe de paquets de test ; et
une unité de détermination, configurée pour déterminer la latence ou la gigue du premier chemin de test selon l'horodatage de réception et un horodatage d'envoi de chaque premier paquet de test.

14. Appareil selon la revendication 13, dans lequel l'unité d'allocation est plus particulièrement configurée pour :

lorsque le module de réception reçoit un i-ème premier paquet de test dans le premier groupe de paquets de test, déterminer si i est égal ou non à j, i représentant un identifiant de paquet d'un premier paquet de test actuellement reçu et j représentant un identifiant de paquet d'un paquet de test à traiter ;

si i est égal à j, déterminer si une séquence de cache stocke ou non un j+1-ième premier paquet de test, la séquence de cache servant à stocker un premier paquet de test désordonné et un identifiant de paquet du premier paquet de test désordonné étant supérieur à j ; et

si la séquence de cache stocke le j+l-ième premier paquet de test, modifier un horodatage de réception initial du j+l-ième premier paquet de test en un horodatage de réception du i-ème premier paquet de test, et ajouter 1 à j ; et réaliser une étape de détermination si la séquence de cache stocke ou non un j+l-ième premier paquet de test jusqu'à ce que la séquence de cache ne stocke plus le j+l-ième premier paquet de test ; et le module de réception poursuit la réception d'un premier paquet de test parvenu suivant dans le premier groupe de paquets de test.

FIG. 1

| Send a first group of test packets and a second group of test packets | S201 |

| Receive a first group of test packets returned on a first test path and a second group of test packets returned on a second test path | S202 |

| Determine network performance of a to-be-tested link according to a received first group of test packets and a received second group of tested packets | S203 |

FIG. 2A

→ First test path L1

— · ➤ Second test path L2

PO

P1      P2      P3

To-be-tested link L3

FIG. 2B

| | |
|---|---|
| Generate a first group of test packets according to a quantity of preset flapping times | S204 |

↓

| | |
|---|---|
| Send the first group of test packets and a second group of test packets | S201 |

↓

| | |
|---|---|
| Receive a first group of test packets returned on a first test path and a second group of test packets returned on a second test path | S202 |

↓

| | |
|---|---|
| Determine network performance of a to-be-tested link according to a received first group of test packets and a received second group of tested packets | S203 |

FIG. 3A

| | |
|---|---|
| SR packet header | Path information |
| IP packet header | |
| Test packet identifier | Check information |
| Packet ID of a test packet | |
| Path identifier of a test packet | |
| Detector identifier | |
| Sending timestamp | |
| Receiving timestamp | |
| | Optional field |

FIG. 3B

```
┌─────────────────────────────────────────────────┐
│ Send a first group of test packets and a second  │  ⌇ S201
│ group of test packets                            │
└─────────────────────────────────────────────────┘
                        │
                        ▼
┌─────────────────────────────────────────────────┐
│ Receive a first group of test packets returned   │
│ on a first test path and a second group of test  │  ⌇ S202
│ packets returned on a second test path           │
└─────────────────────────────────────────────────┘
                        │
                        ▼
┌─────────────────────────────────────────────────┐
│ Determine a latency or a jitter of the first     │
│ test path according to time information carried   │  ⌇ S203A1
│ in each first test packet in a received first     │
│ group of test packets                            │
└─────────────────────────────────────────────────┘
                        │
                        ▼
┌─────────────────────────────────────────────────┐
│ Determine a latency or a jitter of the second    │
│ test path according to time information carried   │  ⌇ S203B1    ⌇ S203
│ in each second test packet in a received second  │
│ group of test packets                            │
└─────────────────────────────────────────────────┘
                        │
                        ▼
┌─────────────────────────────────────────────────┐
│ Determine a latency of a to-be-tested link       │
│ according to the latency of the first test path, │
│ the latency of the second test path, and a       │
│ quantity of preset flapping times; or determine  │  ⌇ S203C1
│ a jitter of a to-be-tested link according to the │
│ jitter of the first test path, the jitter of the │
│ second test path, and a quantity of preset       │
│ flapping times                                   │
└─────────────────────────────────────────────────┘
```

FIG. 4

Send a first group of test packets and a second group of test packets $\sim$ S201

Receive a first group of test packets returned on a first test path and a second group of test packets returned on a second test path $\sim$ S202

Determine a packet loss rate of the first test path according to a quantity of first test packets in the sent first group of test packets and a quantity of first test packets in a received first group of test packets $\sim$ S203A2

Determine a packet loss rate of the second test path according to a quantity of second test packets in the sent second group of test packets and a quantity of second test packets in a received second group of test packets $\sim$ S203B2 $\sim$ S203

Determine a packet loss rate of a to-be-tested link according to the packet loss rate of the first test path, the packet loss rate of the second test path, and a quantity of preset flapping times $\sim$ S203C2

FIG. 5A

Send a first group of test packets and a second group of test packets $\quad\sim$ S201

Receive a first group of test packets returned on a first test path and a second group of test packets returned on a second test path $\quad\sim$ S202

Determine a quantity of out-of-order test packets in the first group of test packets according to a packet identity ID and a first preset packet identifier of a test packet that are carried in each first test packet in a received first group of test packets, and determine an out-of-order rate of the first test path according to a quotient obtained by dividing the quantity of out-of-order test packets by a quantity of first test packets that are sent on the first test path $\quad\sim$ S203A3

Determine a quantity of out-of-order test packets in the second group of test packets according to a packet ID and a second preset packet identifier of a test packet that are carried in each second test packet in a received second group of test packets, and determine an out-of-order rate of the second test path according to a quotient obtained by dividing the quantity of out-of-order test packets by a quantity of second test packets that are sent on the second test path $\quad\sim$ S203B3 $\quad\sim$ S203

Determine an out-of-order rate of a to-be-tested link according to the out-of-order rate of the first test path, the out-of-order rate of the second test path, and a quantity of preset flapping times $\quad\sim$ S203C3

FIG. 5B

Send a first group of test packets and a second group of test packets $\sim$ S201

Receive a first group of test packets returned on a first test path and a second group of test packets returned on a second test path $\sim$ S202

Allocate a receiving timestamp to each first test packet according to disorder of the first group of test packets $\sim$ SA11

$\sim$ S203A1

Determine a latency or a jitter of the first test path according to the receiving timestamp and a sending timestamp of each first test packet $\sim$ SA12

$\sim$ S203

Determine a latency or a jitter of the second test path according to time information carried in each second test packet in a received second group of test packets $\sim$ S203B1

Determine a latency of a to-be-tested link according to the latency of the first test path, the latency of the second test path, and a quantity of preset flapping times; or determine a jitter of a to-be-tested link according to the jitter of the first test path, the jitter of the second test path, and a quantity of preset flapping times $\sim$ S203C1

FIG. 6A

When an $i^{th}$ first test packet in a first group of test packets is received

↓

Determine whether i is equal to j — Yes →

No ↓

Determine whether a cache sequence is full

Yes →

No ↓

Store the $i^{th}$ first test packet to the cache sequence, and continue to receive a next reached first test packet in the first group of test packets

Determine whether the cache sequence stores a $j^{th}$ first test packet

No ↓

Determine that the $j^{th}$ first test packet has been lost, and determine a latency of the $j^{th}$ first test packet according to an average latency of first test packets whose packet identifiers are less than j in the first group of test packets

Determine whether a cache sequence stores a $j+1^{th}$ first test packet — No →

Yes ↓

Modify an initial receiving timestamp of the $j+1^{th}$ first test packet to a receiving timestamp of the $i^{th}$ first test packet

↓

Add 1 to j

Continue to receive a next reached first test packet in the first group of test packets

EP 3 474 499 B1

FIG. 6B

Receive an $i^{th}$ test packet

Add 1 to m1

Mark the $i^{th}$ test packet with an initial receiving timestamp

Determine whether i is equal to j

Yes

No

Store the $i^{th}$ test packet to a cache sequence

Determine whether the cache sequence is full

Yes

No

Next test packet

Add 1 to m2

Determine whether the cache sequence stores a $j^{th}$ test packet; and if the cache sequence does not store the $j^{th}$ test packet, determine a default latency of the $j^{th}$ test packet

Determine whether a cache sequence stores a $j+1^{th}$ test packet

Yes

No

An initial receiving timestamp of the $j+1^{th}$ test packet is overridden by the receiving timestamp of the $j^{th}$ test packet

Delete the $j+1^{th}$ test packet from the cache sequence

j+1

Determine whether to perform a deletion operation on the test packet in the cache sequence

Yes

No

Next test packet

FIG. 7

Test packet sequence | 1 | 2 | 6 | 4 | 5 | 7 | 8 | 9 | 11 | 10 |

Cache sequence | 6 | 4 | 5 | 7 | 8 |

| 11 |

## FIG. 8

Receive a group of test packets returned on a test path — S901

Allocate a receiving timestamp to each test packet in a group of test packets according to disorder of the group of test packets — S902

Determine a latency or a jitter of the test path according to the receiving timestamp and a sending timestamp of each test packet — S903

## FIG. 9A

When an i$^{th}$ test packet in a group of test packets is received

↓

Determine whether i is equal to j

—Yes→

Determine whether a cache sequence stores a j+1$^{th}$ first test packet

—No→ Continue to receive a next reached test packet in the group of test packets

↓ Yes

Modify an initial receiving timestamp of the j+1$^{th}$ test packet to a receiving timestamp of the i$^{th}$ test packet

↓

Add I to j

No ↓

Determine whether a cache sequence is full

—Yes→

Determine whether the cache sequence stores a j$^{th}$ first test packet

No ↓

Store the i$^{th}$ test packet to the cache sequence, and continue to receive a next reached test packet in the group of test packets

No ↓

Determine that the j$^{th}$ test packet has been lost, and determine a latency of the j$^{th}$ test packet according to an average latency of test packets whose packet identifiers are less than j in the group of test packets

FIG. 9B

Network performance check apparatus

| Sending module | Receiving module | Determining module | ~100 |
|---|---|---|---|

1001　　　　　　　　1002　　　　　　　　1003

FIG. 10

Network performance check apparatus

Processor ~1101　　Memory ~1102

~110

Receiver ~1103　　Transmitter ~1104

FIG. 11

Network performance check apparatus

| Receiving module | Allocation module | Determining module |

1201        1202        1203

~ 120

FIG. 12

Network performance check apparatus

Processor ~1301

Transceiver ~1303     Memory ~1302

~130

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20140269266 A1
- US 20060092850 A1

- EP 3474493 A1